(19) Europäisches Patentamt
European Patent Office
Office européen des brevets

(11) **EP 3 361 796 B1**

(12) **EUROPEAN PATENT SPECIFICATION**

(45) Date of publication and mention
of the grant of the patent:
**29.04.2020 Bulletin 2020/18**

(21) Application number: **16853021.0**

(22) Date of filing: **12.07.2016**

(51) Int Cl.:
*H04W 68/00* (2009.01)     *H04W 48/12* (2009.01)

(86) International application number:
**PCT/CN2016/089805**

(87) International publication number:
**WO 2017/059714 (13.04.2017 Gazette 2017/15)**

(54) **PAGING PROCESSING METHODS AND DEVICE**

VERFAHREN UND VORRICHTUNG ZUR FUNKRUFVERARBEITUNG

PROCÉDÉS ET DISPOSITIF DE TRAITEMENT DE RADIOMESSAGERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.10.2015 CN 201510655744**

(43) Date of publication of application:
**15.08.2018 Bulletin 2018/33**

(73) Proprietor: ZTE Corporation
**Shenzhen, Guangdong 518057 (CN)**

(72) Inventor: **DU, Ting**
**Shenzhen**
**Guangdong 518057 (CN)**

(74) Representative: **Ipsilon**
**Le Centralis**
**63, avenue du Général Leclerc**
**92340 Bourg-la-Reine (FR)**

(56) References cited:
WO-A1-2015/139328     CN-A- 101 541 080
CN-A- 103 380 648     CN-A- 103 493 516
CN-A- 103 516 419     US-A1- 2012 213 130

• "3rd Generation Partnership Project; Technical Specification Group Radio Access Network; Evolved Universal Terrestrial Radio Access (E-UTRA); Physical channels and modulation (Release 12)", 3GPP STANDARD; 3GPP TS 36.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.7.0, 22 September 2015 (2015-09-22), pages 1-136, XP050996213, [retrieved on 2015-09-22]
• "3rd Generation Partnership Project; Technical Specification Group Radio Access Network; Evolved Universal Terrestrial Radio Access (E-UTRA); Radio Resource Control (RRC); Protocol specification (Release 12)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.7.0, 24 September 2015 (2015-09-24), pages 1-453, XP050996305, [retrieved on 2015-09-24]

• "3 rd Generation Partnership Project; Technical Specification Group Radio Access Network; Evolved Universal Terrestrial Radio Access (E-UTRA); User Equipment (UE) procedures in idle mode (Release 12)", 3GPP DRAFT; 36304-C60, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 24 September 2015 (2015-09-24), XP051023167, Retrieved from the Internet: URL:http://www.3gpp.org/ftp/tsg_ran/WG2_RL 2/Specifications/201509_final_specs_after_ RAN_69/ [retrieved on 2015-09-24]

**Description**

**TECHNICAL FIELD**

The present application relates to, but is not limited to, the field of communications, and more particularly, to a paging processing method and device.

**BACKGROUND**

In order to reduce power consumption, a User Equipment (UE) uses Discontinuous Reception (DRX) in an idle mode. A Paging Occasion (PO) is a subframe where a Paging-Radio Network Temporary Identifier (P-RNTI) may possibly send a message for addressing the paging on a Physical Downlink Control Channel (PDCCH). A Paging Frame (PF) is a radio frame which contains at least one paging occasions. When the DRX is used, the UE may only monitor one PO in each DRX cycle (DRX cycle).

The PF is given by a formula (1):

$$\text{SFN mod } T = (T \text{ div } N) * (UE\_ID \text{ mod } N) \qquad (1)$$

Table 1 is a paging subframe pattern table of a Time Division Duplex (TDD) mode. As shown in Table 1, an index number i_s pointing to the PO in the paging subframe pattern may be calculated by a formula (2):

$$i\_s = \text{floor}(UE\_ID/N) \text{ mod } Ns \qquad (2)$$

No matter when a DRX parameter is changed in System Information (SI), the system information DRX parameter stored in the UE should be updated locally. If the UE initiates an emergency call without an International Mobile Subscriber Identification Number (IMSI), for instance, without a Universal Subscriber Identity Module (USIM), the UE shall use a default identity in the PF and the i_s formula, i.e., UE_ID=0.

The UE acquires related information of the DRX from a System Information Block (SIB) 2, and then the UE monitors a PDCCH channel according to a DRX cycle, to check whether there is a paging message. If the PDCCH channel indicates that there is a paging message, then the UE demodulates a Paging Channel (PCH) to see if the paging message belongs to itself. The paging is notified to the UE via a PDCCH Downlink Control Information (DCI) format 1C. The notification of the PDCCH carries a P-RNTI, indicating that it is a paging message. A paged UE ID is carried in a paging message of the Paging Channel (PCH), and the PCH is mapped to a Physical Downlink Shared Channel (PDSCH), and the UE ID is an IMSI or a Serving-Temporary Mobile Subscriber Identity (S-TMSI) distributed by a Mobility Management Entity (MME). In order to reduce the power consumption of the UE under a Radio Resource Control Idle (RRC_IDLE) state, the UE receives the paging message using a discontinuous reception manner, and the UE in the RRC_IDLE state intercepts the PDCCH in specific subframes. These specific subframes are called POs. The radio frames where these subframes are located are called paging PFs. Two parameters T and nB related to the PF and the PO are notified to the UE by system information SIB2.

After calculating specific locations of the PF and the PO according to the formulas (1) and (2), the UE starts to intercept a PDCCH of a corresponding subframe, and if a P-RNTI is found, then the paging message is acquired from the PDSCH of the same subframe according to Resource Block (RB) allocation and a modulation and coding scheme indicated by the PDCCH. If the paging message contains the ID of this UE, then a paging response is initiated; otherwise, the PDCCH of the corresponding subframe is continuously intercepted after T radio frames.

The following parameters are used in the PF and the i_s formulas, such as the formula (1) and formula (2):

SFN: System Frame Number.

T: a DRX cycle of the UE. T is determined by a minimum DRX value of the UE. If the DRX is allocated by a high level, a default DRX value is broadcast in a system broadcast message. This default value is applied if the DRX of the UE is not allocated by a higher layer.

nB: 4T, 2T, T, T/2, T/4, T/8, T/16, and T/32. This parameter mainly represents a paging density, 4T indicates that each radio frame has four subframes used for paging, and T/4 indicates that every four radio frames have one subframe used for paging. This value determines a paging capacity of the system and is read from the SIB2.

N: min(T,nB).

Ns: max(1,nB/T).

UE_ID: IMSI mod 1024.

floor(UE_ID/N): the maximum integer that is no more than UE_ID/N.

IMSI is a decimal integer, such as: IMSI=12 (digit1=1, digit2=2), then it should be "12", rather than "1*16+2=18".

Table 1

| Ns | PO when i_s=0 | PO when i_s=1 | PO when i_s=2 | PO when i_s=3 |
|---|---|---|---|---|
| 1 | 0 | N/A | N/A | N/A |
| 2 | 0 | 5 | N/A | N/A |
| 4 | 0 | 1 | 5 | 6 |

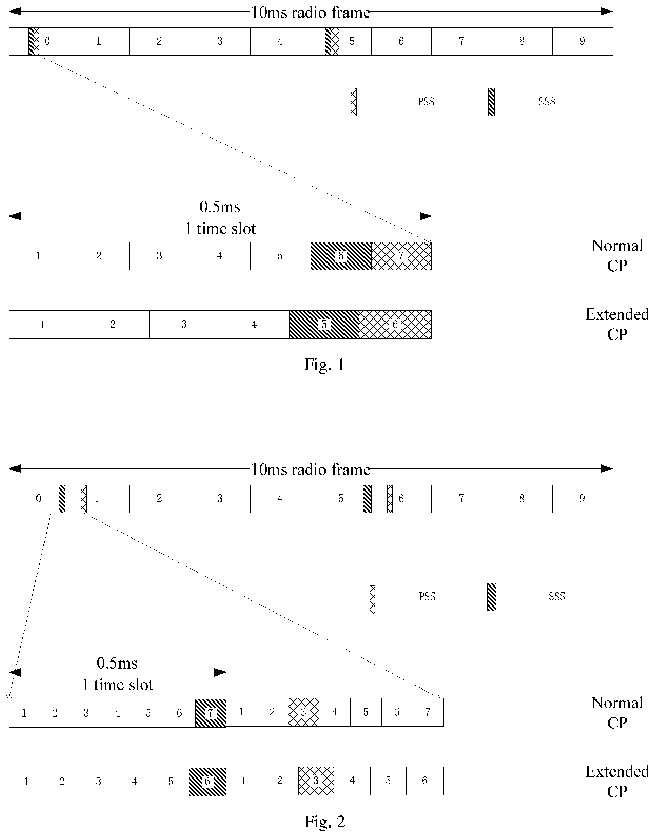

In a synchronization process, two specially designed physical signals are used to broadcast on each cell, which are a Primary Synchronization Signal (PSS) and a Secondary Synchronization Signal (SSS) respectively. Fig. 1 is a schematic diagram of a time domain structure of a PSS and an SSS in an Frequency Division Duplex (FDD) mode in the related art, and Fig. 2 is a schematic diagram of the time domain structure of the PSS and the SSS in a Time Division Duplex (TDD) mode in the related art: showing periodic transmission of the synchronization signals, wherein each 10 ms radio frame is transmitted twice. As shown in Fig. 1, in an FDD cell, the PSS is always located on the last Orthogonal Frequency Division Multiplexing (OFDM) symbol in the first and eleventh time slots of each radio frame, enabling the User Equipment (UE) to acquire slot boundary timing without considering a length of a Cyclic Prefix (CP). The SSS is directly located before the PSS. Assuming that coherence duration of the channel is much greater than one OFDM symbol cycle, the correlation of the PSS and the SSS may be used for coherent detection in this design. As shown in Fig. 2, in a TDD cell, the PSS is located on the third and thirteenth time slots of each radio frame, so that the SSS is earlier than the PSS by 3 symbols. Assuming that the coherence duration of the channel is much greater than 4 OFDM symbol time, the coherent detection may be performed by using the PSS and the SSS.

An exact location of the SSS depends on the length of the CP selected according to the cell. In a specific cell, the PSSs are the same in every subframe in which the PSSs are transmitted, while two SSSs in each radio frame are transmitted variably for each radio frame in a specified manner, so that the UE can recognize the boundary location of a 10ms radio frame. The SSS acquires a sequence having a length of 62 via two m sequences having a length of 31 by cross-cascade. In one radio frame, the cross-cascade mode of the SSS in the first half of the frame is opposite to the cross-cascade mode of the SSS in the second half of the frame. Such a design enables the UE to distinguish the starting location of the radio frame by detecting the orders of the sequences. The original SCH design of the TDD follows the design of a Time Division-Synchronous Code Division Multiple Access (TD-SCDMA), which places the PSS in a Downlink Pilot Time Slot (DwPTS) to take the configuration with minimum OFDM symbols (three OFDM symbols) in the DwPTS in the TDD mode into consideration and avoid collisions between the SCH and a synchronization channel and a Cell-specific Reference Signal (CRS)/PDCCH/Physical Control Format Indicator Channel (PCFICH)/Physical Hybrid ARQ Indicator Channel (PHICH), the SSS has to be placed on the last OFDM symbol in the previous time slot of the PSS. The significance of placing the SSS on the last OFDM symbol is not only to make it as close as possible to the PSS for facilitating coherent detection, but also to facilitate the distinguishing of a time slot boundary when the SSS is detected.

At the 69th conference of SA1, a demand for enhanced videos was proposed, wherein using an e-multimedia Broadcast Multicast Service (eMBMS) as an enhanced video transmission technology was mentioned, but the resource utilization of the eMBMS was at most 60%. Because for a radio frame, subframes 0, 4, 5 and 9 in the Frequency Division Duplex (FDD) mode may not be configured as a Multicast Broadcast Single Frequency Network (MBSFN) subframe, the subframes 0 and 5 carry important information such as a Master Information Block (MIB), a System Information Block (SIB1), a Primary Synchronization Signal (PSS), and a Secondary Synchronization Signal (SSS); the subframes 0, 4, 5 and 9 are all paging (paging) subframes and play a role of paging. The subframes 0, 1, 5 and 6 in the TDD mode may be configured as MBSFN subframes. The subframes 0 and 5 carry important information such as the MIB, the SIB1 and the SSS. The subframes 1 and 6 are special subframes and carry important information such as the PSS, and the four subframes 0, 1, 5 and 6 are all paging subframes and play a role of paging.

No effective solution has been proposed yet for the problem that the subframe configuration cannot satisfy special demands in the transmission technology in the TDD mode in the related art.

WO2015139328 discloses a method, comprising: configuring an unlicensed spectrum serving cell for a user equipment by means of a configuration message of the unlicensed spectrum serving cell; and then transmitting data on the unlicensed spectrum serving cell by means of a scheduling command.

US2012213130 discloses carrier aggregation to enhance eMBMS, including transmitting unicast signaling for a unicast service on an anchor carrier to mobile entities, transmitting eMBMS signaling on a second carrier different from the anchor carrier to the mobile entities for use with the unicast signaling, and various techniques for practical application of carrier aggregation for eMBMS enhancement.

"3rd Generation Partnership Project; Technical Specification Group Radio Access Network; Evolved Universal Terrestrial Radio Access (E-UTRA); Physical channels and modulation (Release 12)", 3GPP STANDARD, vol. RAN WG1, no. V12.70, 22 September 2015, pages 1-136 discloses the physical channels for Evolved Universal Terrestrial Radio Access (E-UTRA).

"3rd Generation Partnership Project; Technical Specification Group Radio Access Network; Evolved Universal Terrestrial Radio Access (E-UTRA); Radio Resource Control (RRC); Protocol specification (Release 12)", 3GPP STANDARD, vol. RAN WG2, no. V12.7.0, 24 September 2015, pages 1-453 discloses the Radio Resource Control protocol for the radio interface between UE and Evolved-Universal Mobile Telecommunications Service Terrestrial Radio Access Network (E-UTRAN) as well as for the radio interface between RN and E-UTRAN.

"3rd Generation Partnership Project; Technical Specification Group Radio Access Network; Evolved Universal Terrestrial Radio Access (E-UTRA); User Equipment (UE) procedures in idle mode (Release 12)", 3GPP DRAFT, 24 September 2015 discloses the Access Stratum (AS) part of the Idle Mode procedures applicable to a UE.

## SUMMARY

The following is an overview of the subject detailed herein. This summary is not intended to limit the scope of protection of the claims.

The embodiments of the present disclosure provide a paging processing method and device, so as to at least solve the problem that the subframe configuration cannot satisfy special demands in the transmission technology under the TDD mode in the related art.

According to an aspect of the embodiments of the present disclosure, there is provided a paging processing method, applied to a Time Division Duplexing (TDD) mode, including: acquiring a paging occasion where a user is located; and in the case of determining that the paging occasion is at least one of a subframe 0 and a subframe 5, paging the user by using at least one of a subframe 1 and a subframe 6; the at least one of the subframe 1 and the subframe 6 containing: a Master Information Block (MIB), a System Information Block (SIB1), a Secondary Synchronization Signal (SSS), and a Primary Synchronization Signal (PSS).

In the embodiments of the present disclosure, the above at least one of the subframe 1 and the subframe 6 may be used as a Multicast Broadcast Single Frequency Network (MBSFN) subframe.

In the embodiments of the present disclosure, when the paging occasion is at least one of the subframe 0 and the subframe 5, the paging the user on at least one of the subframe 1 and the subframe 6 includes at least one of the following: when i_s is 0 and $N_s$ is 4, setting i_s to be 1 or 3; and, when i_s is 2 and $N_s$ is 4, setting i_s to be 3 or 1; wherein, i_s represents an index number of the paging occasion, $N_s$ represents a larger value of 1 and Nb/T, $N_b$ is 4*T which represents that each radio frame has four subframes used for paging, and T is a discontinuous reception cycle of the user; when i_s is 0 and $N_s$ is 4, the paging occasion is the subframe 0; when i_s is 1 and $N_s$ is 4, the paging occasion is the subframe 1; when i_s is 2 and $N_s$ is 4, the paging occasion is the subframe 5; and when i_s is 3 and $N_S$ is 4, the paging occasion is the subframe 6; and
paging the user on a paging occasion indicated by $N_S=4$ and the set i_s together.

In the embodiments of the present disclosure, after paging the user by using at least one of the subframe 1 and the subframe 6, the method further includes: combining paging contents of multiple users with the same paging occasion into one paging message, and transmitting the paging message to the multiple users through a paging channel.

In the embodiments of the present disclosure, before acquiring the paging occasion where the user is located, the method further includes: configuring a Physical Broadcast Channel (PBCH) carrying the MIB, the SIB1, the SSS, and the PSS on at least one of the subframe 1 and the subframe 6.

In the embodiments of the present disclosure, the configuring the SSS on at least one of the subframe 1 and the subframe 6 includes: configuring the SSS and the PSS to be located on the same subframe, wherein the same subframe is the subframe 1 or the subframe 6; and the SSS and the PSS being located on the same subframe includes at least one of the following: the SSS being located on an OFDM symbol before an OFDM symbol of a subframe where the PSS is located; and the SSS being located on an OFDM symbol after the OFDM symbol of the subframe where the PSS is located.

In the embodiments of the present disclosure, the PBCH, the SSS and the PSS are configured to be located on the same subframe, wherein the same subframe is the subframe 1 or the subframe 6.

In the embodiments of the present disclosure, the configuring the SSS and the PBCH on at least one of the subframe 1 and the subframe 6 includes: configuring the SSS and the PBCH on at least one of the subframe 1 and the subframe 6 according to a length of a Cyclic Prefix (CP) and a special subframe configuration table in Third Generation Partnership Project (3GPP) TS 36.211 V12.7.0 22 September 2015.

In the embodiments of the present disclosure, the configuring the SSS and the PBCH on at least one of the subframe 1 and the subframe 6 according to the length of the Cyclic Prefix (CP) and the special subframe configuration table in 3GPP TS 36.211 V12.7.0 22 September 2015 includes:

under a normal CP, for a port 0, a port 1, a port 2, or a port 3, when a special subframe configuration is at least one of a special subframe configuration 0 and a special subframe configuration 5 in the special subframe configuration table, configuring the PSS and the SSS to be placed on different subframes in the subframes 1 and 6, and configuring the PBCH, the PSS and the SSS to be placed on different subframes in the subframes 1 and 6; and when the special subframe configuration is a special subframe configuration 1, 2, 3, 4, 6, 7, 8 or 9 in the special subframe configuration table, placing the SSS and the PSS on the same subframe in the subframe 1 or 6, and placing the PBCH, the PSS and the SSS on the same subframe in the subframe 1 or 6; and under an extended CP, for the port 0, the port 1, the port 2, or the port 3, when the special subframe configuration is at least one of the special subframe configuration 0 and the special subframe configuration 4 in the special subframe configuration table, placing the PSS and the SSS on different subframes in the subframes 1 and 6, and placing the PBCH, the PSS and the SSS on different subframes in the subframes 1 and 6; and when the special subframe configuration is the special subframe configuration 1, 2, 3, 5, 6, or 7 in the special subframe configuration table, placing the SSS and the PSS on the same subframe in the subframe 1 or 6, and placing the PBCH, the PSS and the SSS on the same subframe in the subframe 1 or 6.

In the embodiments of the present disclosure, under the normal CP, for the port 0 or 1, when the special subframe configuration is the special subframe configuration 1, 2, 3, 4, 6, 7, 8 or 9 in the special subframe configuration table, the placing the SSS and the PSS on the same subframe in the subframe 1 or 6 includes: when the special subframe configuration is the special subframe configuration 9 in the special subframe configuration table, placing the SSS on the third or fifth OFDM symbol of at least one of the subframe 1 and the subframe 6, and placing the PSS on the fifth or sixth OFDM symbol of at least one of the subframe 1 and the subframe 6; and when the special subframe configuration is the special subframe configuration 1, 2, 3, 4, 6, 7 or 8 in the special subframe configuration table, placing the SSS on the third, fourth or sixth OFDM symbol of at least one of the subframe 1 and the subframe 6, and placing the PSS on the fourth, sixth or seventh OFDM symbol of at least one of the subframe 1 and the subframe 6; wherein, the SSS and the PSS are located on different OFDM symbols in at least one of the subframe 1 and the subframe 6.

In the embodiments of the present disclosure, under the normal CP, for the port 2 or 3, when the special subframe configuration is the special subframe configuration 1, 2, 3, 4, 6, 7, 8 or 9 in the special subframe configuration table, the placing the SSS and the PSS on the same subframe in the subframe 1 or 6 includes: when the special subframe configuration is the special subframe configuration 9 in the special subframe configuration table, placing the SSS on the third, fourth or fifth OFDM symbol of at least one of the subframe 1 and the subframe 6, and placing the PSS on the fourth, fifth or sixth OFDM symbol of at least one of the subframe 1 and the subframe 6; and when the special subframe configuration is the special subframe configuration 1, 2, 3, 4, 6, 7 or 8 in the special subframe configuration table, placing the SSS on the third, fourth, fifth or sixth OFDM symbol of at least one of the subframe 1 and the subframe 6, and placing the PSS on the fourth, fifth, sixth or seventh OFDM symbol of at least one of the subframe 1 and the subframe 6; wherein, the SSS and the PSS are located on different OFDM symbols in at least one of the subframe 1 and the subframe 6.

In the embodiments of the present disclosure, under the extended CP, for the ports 0 and 1, when the special subframe configuration is the special subframe configuration 1, 2, 3, 5, 6 or 7 in the special subframe configuration table, the placing the SSS and the PSS on the same subframe in the subframe 1 or 6 includes: when the special subframe configuration is the special subframe configuration 7 in the special subframe configuration table, placing the SSS on the fourth OFDM symbol of at least one of the subframe 1 and the subframe 6, and placing the PSS on the fifth OFDM symbol of at least one of the subframe 1 and the subframe 6; and when the special subframe configuration is the special subframe configuration 1, 2, 3, 5 or 6 in the special subframe configuration table, placing the SSS on the third or fifth OFDM symbol of at least one of the subframe 1 and the subframe 6, and placing the PSS on the fifth or sixth OFDM symbol of at least one of the subframe 1 and the subframe 6; wherein, the SSS and the PSS are located on different OFDM symbols in at least one of the subframe 1 and the subframe 6.

In the embodiments of the present disclosure, under the extended CP, for the ports 2 and 3, when the special subframe configuration is the special subframe configuration 1, 2, 3, 5, 6 or 7 in the special subframe configuration table, the placing the SSS and the PSS on the same subframe in the subframe 1 or 6 includes: when the special subframe configuration is the special subframe configuration 7 in the special subframe configuration table, placing the SSS on the third or fourth OFDM symbol of at least one of the subframe 1 and the subframe 6, and placing the PSS on the fourth or fifth OFDM symbol of at least one of the subframe 1 and the subframe 6; and when the special subframe configuration is the special subframe configuration 1, 2, 3, 5 or 6 in the special subframe configuration table, placing the SSS on the third, fourth or fifth OFDM symbol of at least one of the subframe 1 and the subframe 6, and placing the PSS on the fourth, fifth or sixth OFDM symbol of at least one of the subframe 1 and the subframe 6; wherein, the SSS and the PSS are located on different OFDM symbols in at least one of the subframe 1 and the subframe 6.

In the embodiments of the present disclosure, before the configuring the SSS and the PBCH on at least one of the subframe 1 and the subframe 6 according to the length of the CP and the special subframe configuration table in 3GPP TS 36.211 V12.7.0 22 September 2015, the method includes: determining a location of a Cell-specific Reference Signal (CRS) on at least one of the subframe 1 and the subframe 6 according to the length of the CP and the special subframe configuration table as well as a following formula;

$$ l = \begin{cases} 0, N_{\text{symb}}^{\text{DL}} - 3 & \text{if } p \in \{0,1\} \\ 1 & \text{if } p \in \{2,3\} \end{cases} $$

wherein, p is a transmitting port of the CRS, $N_{\text{symb}}^{\text{DL}}$ is a total number of downlink OFDM contained in one time slot, and 1 is a time domain resource index.

In the embodiments of the present disclosure, when the ports are 0 and 1, under the normal CP, when the special subframe configuration is at least one of the special subframe configuration 0 and the special subframe configuration 5 in the special subframe configuration table, the CRS is placed on the first OFDM symbol of at least one of the subframe 1 and the subframe 6; when the special subframe configuration is the special subframe configuration 9 in the special subframe configuration table, the CRS is placed on the first and fourth OFDM symbols of at least one of the subframe 1 and the subframe 6; and when the special subframe configuration is the special subframe configuration 1, 2, 3, 4, 6, 7 or 8 in the special subframe configuration table, the CRS is placed on the first and fifth OFDM symbols of at least one of the subframe 1 and the subframe 6; under the extended CP, when the special subframe configuration is at least one of the special subframe configuration 0 and the special subframe configuration 4 in the special subframe configuration table, the CRS is placed on the first OFDM symbol of at least one of the subframe 1 and the subframe 6; when the special subframe configuration is the special subframe configuration 7 in the special subframe configuration table, the CRS is placed on the first and third OFDM symbols of at least one of the subframe 1 and the subframe 6; and when the special subframe configuration is the special subframe configuration 1, 2, 3, 5 or 6 in the special subframe configuration table, the CRS is placed on the first and fourth OFDM symbols of at least one of the subframe 1 and the subframe 6; and when the ports are 2 and 3, the CRS is placed on the second OFDM symbol of at least one of the subframe 1 and the subframe 6.

According to another aspect of the embodiments of the present disclosure, there is provided a paging processing method, applied to a TDD mode, including: acquiring a paging occasion where a user is located; in the case that the paging occasion is at least one of a subframe 0 and a subframe 5, intercepting a paging message on at least one of a subframe 1 and a subframe 6; and acquiring a MIB, a SIB1, a SSS and a PSS on at least one of the subframe 1 and the subframe 6.

In the embodiments of the present disclosure, at least one of the subframe 1 and the subframe 6 is used as a Multicast Broadcast Single Frequency Network (MBSFN) subframe.

In the embodiments of the present disclosure, in the case that the paging occasion is at least one of the subframe 0 and the subframe 5, the intercepting the paging message on at least one of the subframe 1 and the subframe 6 includes at least one of the following: when i_s is 0 and $N_S$ is 4, setting i_s to be 1 or 3; and, when i_s is 2 and $N_S$ is 4, setting i_s to be 3 or 1; wherein, i_s represents an index number of the paging occasion, NS represents a larger value of 1 and $N_b$/T, $N_b$ is 4*T which represents that each radio frame has four subframes used for intercepting paging, and T is a discontinuous reception cycle of the user; when i_s is 0 and NS is 4, the paging occasion is the subframe 0; when i_s is 1 and $N_S$ is 4, the paging occasion is the subframe 1; when i_s is 2 and $N_S$ is 4, the paging occasion is the subframe 5; and when i_s is 3 and $N_S$ is 4, the paging occasion is the subframe 6; and intercepting the paging message on a paging occasion indicated by Ns=4 and the set i_s together.

In the embodiments of the present disclosure, the intercepting the paging message on at least one of the subframe 1 and the subframe 6 includes: intercepting a Physical Downlink Control Channel (PDCCH) of at least one of the subframe 1 and the subframe 6; and acquiring the paging message on a Physical Downlink Shared Channel (PDSCH) of at least one of the subframe 1 and the subframe 6 according to a Resource Block (RB) distribution mode and a Modulation and Coding Scheme (MCS) indicated by the PDCCH.

In the embodiments of the present disclosure, after the intercepting the paging message on at least one of the subframe 1 and the subframe 6, the method further includes: determining whether the paging message contains an identity of the user; if the paging message contains the identity of the user, sending a paging response message to a base station where the user is located; otherwise, continuing to intercept the paging message after a predetermined time.

In the embodiments of the present disclosure, the acquiring the MIB, the SSS and the PSS on at least one of the subframe 1 and the subframe 6includes: acquiring a Physical Broadcast Channel (PBCH), the SSS and the PSS according to location information of the PBCH carrying the MIB, the SSS and the PSS in at least one of the subframe 1 and the subframe 6, and acquiring the MIB according to the acquired PBCH.

In the embodiments of the present disclosure, the location information of the PBCH, the SSS and the PSS in at least one of the subframe 1 and the subframe 6 includes at least one of the following: the SSS being located on an OFDM symbol before an OFDM symbol of a subframe where the PSS is located; and the SSS being located on an OFDM symbol after the OFDM symbol of the subframe where the PSS is located.

In the embodiments of the present disclosure, the location information of the PBCH, the SSS and the PSS in at least one of the subframe 1 and the subframe 6 includes:

under a normal CP, for a port 0, a port 1, a port 2, or a port 3, when a special subframe configuration is at least one of a special subframe configuration 0 and a special subframe configuration 5 in a special subframe configuration table in 3GPP TS 36.211 V12.7.0 22 September 2015, the PSS and the SSS being located on different subframes in the subframe 1 or 6, and the PBCH, the PSS and the SSS being located on different subframes in the subframe 1 or 6; and when the special subframe configuration is a special subframe configuration 1, 2, 3, 4, 6, 7, 8 or 9 in the special subframe configuration table, the SSS and the PSS being located on the same subframe in the subframe 1 or 6, and the PBCH, the PSS and the SSS being located on the same subframe in the subframe 1 or 6; and

under an extended CP, for the port 0, the port 1, the port 2, or the port 3, when the special subframe configuration is at least one of the special subframe configuration 0 and the special subframe configuration 4 in the special subframe configuration table, the PSS and the SSS being located on different subframes in the subframe 1 or 6, and the PBCH, the PSS and the SSS being located on different subframes in the subframe 1 or 6; and when the special subframe configuration is the special subframe configuration 1, 2, 3, 5, 6, or 7 in the special subframe configuration table, the SSS and the PSS being located on the same subframe in the subframe 1 or 6, and the PBCH, the PSS and the SSS being located on the same subframe in the subframe 1 or 6.

In the embodiments of the present disclosure, under the normal CP, for the port 0 or 1, when the special subframe configuration is the special subframe configuration 1, 2, 3, 4, 6, 7, 8 or 9 in the special subframe configuration table, the SSS and the PSS being located on the same subframe in the subframe 1 or 6 includes: when the special subframe configuration is the special subframe configuration 9 in the special subframe configuration table, the SSS being located on the third or fifth OFDM symbol of at least one of the subframe 1 and the subframe 6, and the PSS being placed on the fifth or sixth OFDM symbol of at least one of the subframe 1 and the subframe 6; and when the special subframe configuration is the special subframe configuration 1, 2, 3, 4, 6, 7 or 8 in the special subframe configuration table, the SSS being located on the third, fourth or sixth OFDM symbol of at least one of the subframe 1 and the subframe 6, and the PSS being located on the fourth, sixth or seventh OFDM symbol of at least one of the subframe 1 and the subframe 6; wherein, the SSS and the PSS are located on different OFDM symbols in at least one of the subframe 1 and the subframe 6.

In the embodiments of the present disclosure, under the normal CP, for the port 2 or 3, when the special subframe configuration is the special subframe configuration 1, 2, 3, 4, 6, 7, 8 or 9 in the special subframe configuration table, the placing the SSS and the PSS on the same subframe in the subframe 1 or 6 includes: when the special subframe configuration is the special subframe configuration 9 in the special subframe configuration table, the SSS being located the third, fourth or fifth OFDM symbol of at least one of the subframe 1 and the subframe 6, and the PSS being located on the fourth, fifth or sixth OFDM symbol of at least one of the subframe 1 and the subframe 6; and when the special subframe configuration is the special subframe configuration 1, 2, 3, 4, 6, 7 or 8 in the special subframe configuration table, the SSS being located on the third, fourth, fifth or sixth OFDM symbol of at least one of the subframe 1 and the subframe 6, and the PSS being located on the fourth, fifth, sixth or seventh OFDM symbol of at least one of the subframe 1 and the subframe 6; wherein, the SSS and the PSS are located on different OFDM symbols in at least one of the subframe 1 and the subframe 6.

In the embodiments of the present disclosure, under the extended CP, for the ports 0 and 1, when the special subframe configuration is the special subframe configuration 1, 2, 3, 5, 6 or 7 in the special subframe configuration table, the SSS and the PSS being located on the same subframe in the subframe 1 or 6 includes: when the special subframe configuration is the special subframe configuration 7 in the special subframe configuration table, the SSS being located on the fourth OFDM symbol of at least one of the subframe 1 and the subframe 6, and the PSS being located on the fifth OFDM symbol of at least one of the subframe 1 and the subframe 6; and when the special subframe configuration is the special subframe configuration 1, 2, 3, 5 or 6 in the special subframe configuration table, the SSS being located on the third or fifth OFDM symbol of at least one of the subframe 1 and the subframe 6, and the PSS being located on the fifth or sixth OFDM symbol of at least one of the subframe 1 and the subframe 6; wherein, the SSS and the PSS are located on different OFDM symbols in at least one of the subframe 1 and the subframe 6.

In the embodiments of the present disclosure, under the extended CP, for the ports 2 and 3, when the special subframe configuration is the special subframe configuration 1, 2, 3, 5, 6 or 7 in the special subframe configuration table, the placing the SSS and the PSS on the same subframe in the subframe 1 or 6 includes: when the special subframe configuration is the special subframe configuration 7 in the special subframe configuration table, the SSS being located on the third or fourth OFDM symbol of at least one of the subframe 1 and the subframe 6, and the PSS being located on the fourth or fifth OFDM symbol of at least one of the subframe 1 and the subframe 6; and when the special subframe configuration is the special subframe configuration 1, 2, 3, 5 or 6 in the special subframe configuration table, the SSS being located on the third, fourth or fifth OFDM symbol of at least one of the subframe 1 and the subframe 6, and the PSS being located on the fourth, fifth or sixth OFDM symbol of at least one of the subframe 1 and the subframe 6; wherein, the SSS and the PSS are located on different OFDM symbols in at least one of the subframe 1 and the subframe 6.

According to another aspect of the embodiments of the present disclosure, there is provided a paging processing device, located on a network side and applied to a Time Division Duplexing (TDD) mode, including: an acquisition module adapted to acquire a paging occasion where a user is located; and a paging module adapted to, in the case of determining that the paging occasion is at least one of a subframe 0 and a subframe 5, page the user by using at least one of a subframe 1 and a subframe 6; wherein, the at least one of the subframe 1 and the subframe 6 contains: a MIB, a SIB1, a SSS, and a PSS.

In the embodiments of the present disclosure, the above device further includes: a configuration module adapted to configure a PBCH carrying the MIB, the SIB1, the SSS, and the PSS on at least one of the subframe 1 and the subframe 6.

According to another aspect of the embodiments of the present disclosure, there is provided a paging processing device, located in a network side and applied to a Time Division Duplexing (TDD) mode, including: a first acquisition module adapted to acquire a paging occasion where a user is located; an intercepting module adapted to, in the case that the paging occasion is at least one of a subframe 0 and a subframe 5, intercept a paging message on at least one of a subframe 1 and a subframe 6; and a second acquisition module adapted to acquire a MIB, a SIB1, a SSS and a PSS on at least one of the subframe 1 and the subframe 6.

The embodiments of the present disclosure also provide a computer readable storage medium storing a computer-executable instruction which, when being executed, implements the above-mentioned paging processing method at a network side.

The embodiments of the present disclosure also provide a computer readable storage medium storing a computer-executable instruction which, when being executed, implements the above-mentioned paging processing method at a terminal side.

Through the embodiments of the present disclosure, in the case that the paging occasion is at least one of the subframe 0 and the subframe 5, the user is paged by using at least one of the subframe 1 and the subframe 6, wherein the at least one of the subframe 1 and the subframe 6 contains: the MIB, the SIB1, the SSS and the PSS, that is, the paging or synchronization function on at least one of the subframe 0 and the subframe 5 is shift to at least one of the subframe 1 and the subframe 6 by modifying the subframe 0 or 5, so that the at least one of the subframe 0 and the subframe 5 becomes a normal subframe; therefore, the at least one of the subframe 0 and the subframe 5 may be set as other subframes, which solves the problem that the subframe configuration cannot satisfy special demands in the transmission technology under the TDD mode in the related art, so as to configure more subframes as special subframes to satisfy the special demands, thus improving the resource utilization of the subframe.

Other aspects will become apparent upon reading and understanding the drawings and detailed description.

## BRIEF DESCRIPTION OF THE DRAWINGS

The accompanying drawings illustrated herein serve to provide a further understanding of the present application and constitute a part of the present application, and the illustrative embodiments of the present application and together with the description thereof serve to explain the present application, and do not constitute inappropriate definition to the present application. In the drawings:

Fig. 1 is a schematic diagram of a time domain structure of a PSS and an SSS in an FDD mode in the related art;
Fig. 2 is a schematic diagram of a time domain structure of a PSS and an SSS in a TDD mode in the related art;
Fig. 3 is a first flow chart of a paging processing method according to an embodiment of the present disclosure;
Fig. 4 is a second flow chart of a paging processing method according to an embodiment of the present disclosure;
Fig. 5 is a third flow chart of a paging processing method according to an embodiment of the present disclosure;
Fig. 6 is a schematic diagram illustrating a structure of a time slot where a SSS and a PSS are in the same subframe in a TDD mode according to an optional embodiment of the present application;
Fig. 7 is a schematic diagram illustrating a structure of a time slot where a PBCH, a PSS and a SSS are in the same subframe in a TDD mode according to an optional embodiment of the present application;
Fig. 8 is a flow chart of cell search according to an optional embodiment of the present application;
Fig. 9 is a first flow chart of a paging processing method according to an optional embodiment of the present application;
Fig. 10 is a second flow chart of a paging processing method according to an optional embodiment of the present application;
Fig. 11 is a corresponding flow chart of initiating paging at a user side according to an optional embodiment of the present application;

Fig. 12 is a first structure block diagram of a paging processing device according to an embodiment of the present disclosure; and

Fig. 13 is a structure block diagram of a paging processing device according to an embodiment of the present disclosure.

## DETAILED DESCRIPTION

The present application will be explained in detail with reference to the accompanying drawings and embodiments hereinafter. It should be noted that, in case of no conflict, the embodiments in the present application and the features in the embodiments may be combined with each other.

It should be noted that the terms "first", "second" and the like in the description and claims of the present application as well as the above drawings are used to distinguish similar objects, and are not necessarily used to describe a specific sequence or a chronological order.

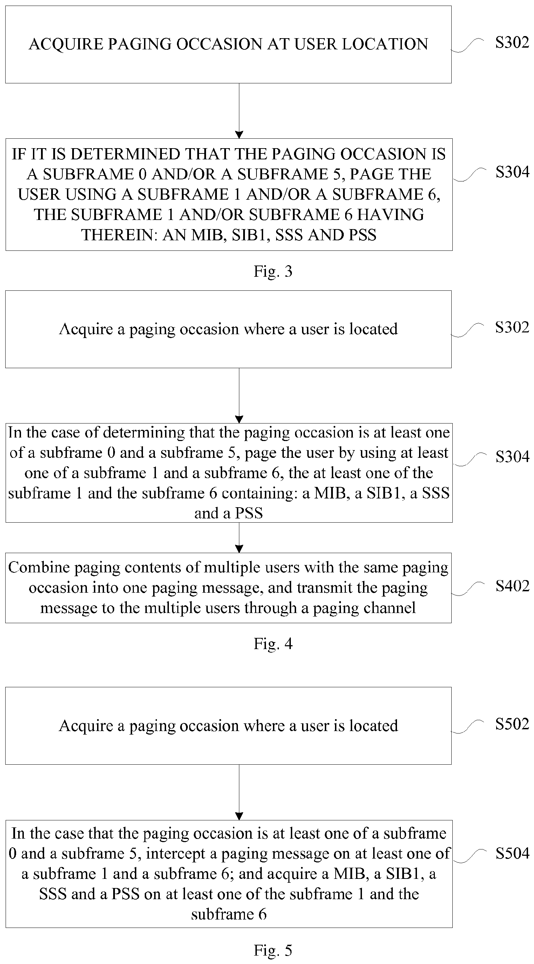

In this embodiment, a paging processing method is provided. Fig. 3 is a first flow chart of a paging processing method according to an embodiment of the present disclosure. As shown in Fig. 3, the method includes the following steps.

In step S302, a paging occasion where a user is located is acquired.

In step S304, in the case of determining that the paging occasion is a subframe 0 and/or a subframe 5, the user is paged by using at least one of a subframe 1 and a subframe 6; the subframe 1 and/or the subframe 6 containing: a Master Information Block (MIB), a System Information Block (SIB1), a Secondary Synchronization Signal (SSS), and a Primary Synchronization Signal (PSS).

Through the above steps, in the case that the paging occasion is the subframe 0 and/or the subframe 5, the user is paged by using the subframe 1 and/or the subframe 6, wherein the subframe 1 and/or the subframe 6 contains: the MIB, the SIB1, the SSS and the PSS, that is, the paging or synchronization function on the subframe 0 and/or the subframe 5 is shift to the subframe 1 and/or the subframe 6 by modifying the subframe 0 or 5, so that the subframe 0 and/or the subframe 5 becomes a normal subframe; therefore, the subframe 0 and/or the subframe 5 may be set as other subframes, which solves the problem that the subframe configuration cannot satisfy special demands in the transmission technology in the Time Division Duplexing (TDD) mode in the related art, configures more subframes as special subframes to satisfy the special demands, and improves the resource utilization of the subframe.

It should be noted that the above special demands may be demands of enhanced videos, and may also be demands of enhanced audios, but are not limited thereto.

In an optional embodiment, the subframe 1 and/or the subframe 6 may be used as a Multicast Broadcast Single Frequency Network (MBSFN) subframe, i.e., the subframe 1 and/or the subframe 6 may be configured as an MBSFN subframe to satisfy the demands on enhanced videos, and can increase a configuration rate of the MBSFN subframe, thereby improving the resource utilization of the enhanced Multimedia Broadcast Multicast Service (eMBMS).

It should be noted that the above paging occasion of the user may be obtained by the following formula:

$$i\_s = \mathrm{floor}(UE\_ID/N) \bmod Ns;$$

wherein, i_s represents an index number of the paging occasion, $N_s$ represents a larger value of 1 and $N_b/T$, $N_b$ is 4*T which represents that each radio frame has four subframes used for paging, and T is a discontinuous reception cycle of the user; UE_ID represents an identity of the user; N represents a smaller value of 1 and $N_b$; and floor (UE_ID/N) represents the largest integer value less than UE_ID/N;

when i_s is 0 and $N_s$ is 4, the paging occasion is the subframe 0; when i_s is 1 and $N_s$ is 4, the paging occasion is the subframe 1; when i_s is 2 and $N_s$ is 4, the paging occasion is the subframe 5; and when i_s is 3 and $N_s$ is 4, the paging occasion is the subframe 6.

In an embodiment of the present application, when the paging occasion in step S304 is the subframe 0 and/or the subframe 5, the paging the user on the subframe 1 and/or the subframe 6 may be implemented in the following manner: when i_s is 0 and $N_s$ is 4, setting i_s to be 1 or 3; and when i_s is 2 and Ns is 4, setting i_s to be 3 or 1; wherein, i_s represents an index number of the paging occasion, $N_s$ represents a larger value of 1 and $N_b/T$, $N_b$ is 4*T which represents that each radio frame has four subframes used for paging, and T is a discontinuous reception cycle of the user; when i_s is 0 and $N_S$ is 4, the paging occasion is the subframe 0; and

when i_s is 1 and $N_s$ is 4, the paging occasion is the subframe 1; when i_s is 2 and $N_s$ is 4, the paging occasion is the subframe 5; and when i_s is 3 and $N_S$ is 4, the paging occasion is the subframe 6.

Therefore, after the setting is modified, $N_s$ is 4, i_s is 1 or 3, that is, the modified paging occasion is the subframe 1 and/or the subframe 6; therefore, the above user is paged on the subframe 1 or 6. That is, the user that shall be paged by the subframe 0 is modified to be paged by the subframe 1 (or subframe 6), and the user that shall be paged by the subframe 5 is modified to be paged by the subframe 6 (or subframe 1). The subframe 0 and/or the subframe 5 is vacated, so that the subframe 0 and/or the subframe 5 may be configured as the MBSFN subframe.

In addition to the role of paging, the subframe 0 or 5 plays the role of Secondary Synchronization Signal (SSS) and sending the MIB information, thereby in the related art, the PBCH carrying the MIB is sent on the first four OFDM symbols of a second time slot of the subframe 0, and the secondary synchronization signal is sent on the last OFDM symbols of the subframes 0, 5. In order to achieve the objective of not occupying the subframes 0, 5, i.e., the objective of changing the subframe 0 and/or the subframe 5 into the normal subframe, the subframe locations of the PBCH and the SSS have to be modified, and the PBCH, SSS, PSS and the SIB1 are placed on the subframes 1 and 6 for transmission. In an embodiment of the present application, before step S302, the above method further includes: configuring a PBCH carrying the MIB, the SIB1, the SSS, and the PSS on the subframe 1 and/or the subframe 6.

In an optional embodiment, the configuring the SSS on the subframe 1 and/or the subframe 6 may include: configuring the SSS and the PSS to be located on the same subframe, wherein the same subframe is the subframe 1 or the subframe 6; and the SSS and the PSS being located on the same subframe includes at least one of the following: the SSS being located on an OFDM symbol before an OFDM symbol of a subframe where the PSS is located; and the SSS being located on an OFDM symbol after the OFDM symbol of the subframe where the PSS is located. On the subframe 1 and/or the subframe 6, the PBCH, the SSS and the PSS are configured to be located on the same subframe, wherein the same subframe is the subframe 1 or the subframe 6.

It should be noted that the SSS and the PSS may either be set in different subframes or set in the same subframe. In an optional embodiment, the SSS and the PSS are located in the same subframe, and the SSS and the PSS may either be located on different OFDM symbols of the same subframe or located on same OFDM symbol of the same subframe, wherein the same subframe is the subframe 1 or the subframe 6. That is, in the optional embodiment, the SSS and the PSS may either be set in the subframe 1 at the same time, or set in the subframe 6 at the same time. The PBCH may either be located in the same subframe as the SSS and the PSS, or located in a different subframe, as long as the PBCH can be searched within a predetermined time. The predetermined time shall be as short as possible. Therefore, in an optional embodiment, the PBCH, the SSS and the PSS are located in the same subframe, wherein the same subframe is the subframe 1 or the subframe 6.

There may be multiple ways for setting the SSS and the PSS in the same subframe. For example, in order to be compatible with the forward search objective in the related art, the SSS is set before the PSS, or the SSS may also be set after the PSS and then the SSS may be searched by backward search. In an optional embodiment, the SSS is located on an OFDM symbol before the OFDM symbol where the PSS is located in the same frame. For example, in a normal Cyclic Prefix (CP), the PSS is located on the seventh OFDM symbol of a time slot 0 of the subframe 1, and then the SSS may be set on any one of the third, fourth and sixth OFDM symbols of the time slot 0 of the subframe 1. In another optional embodiment, the SSS is located on an OFDM symbol after the OFDM symbol where the PSS is located in the same frame.

In an optional embodiment, the configuring the SSS and the PBCH on the subframe 1 and/or the subframe 6 may include: configuring the SSS and the PBCH on the subframe 1 and/or the subframe 6 according to a length of a Cyclic Prefix (CP) and a special subframe configuration table in 3GPP TS 36.211 V12.7.0 22 September 2015.

In the embodiment of the present disclosure, the configuring the SSS and the PBCH on the subframe 1 and/or the subframe 6 according to the length of the Cyclic Prefix (CP) and the special subframe configuration table in 3GPP TS 36.211 V12.7.0 22 September 2015 may include: under a normal CP, for a port 0, a port 1, a port 2, or a port 3, when a special subframe configuration is a special subframe configuration 0 and/or a special subframe configuration 5 in the special subframe configuration table, configuring the PSS and the SSS to be placed on different subframes in the subframes 1 and 6, and configuring the PBCH, the PSS and the SSS to be placed on different subframes in the subframes 1 and 6; and when the special subframe configuration is a special subframe configuration 1, 2, 3, 4, 6, 7, 8 or 9 in the special subframe configuration table, placing the SSS and the PSS on the same subframe in the subframe 1 or 6, and placing the PBCH, the PSS and the SSS on the same subframe in the subframe 1 or 6; and under an extended CP, for the port 0, the port 1, the port 2, or the port 3, when the special subframe configuration is the special subframe configuration 0 and/or the special subframe configuration 4 in the special subframe configuration 0 and/or the special subframe configuration 4 in the special subframe configuration table, placing the PSS and the SSS on different subframes in the subframes 1 and 6, and placing the PBCH, the PSS and the SSS on different subframes in the subframes 1 and 6; and when the special subframe configuration is the special subframe configuration 1, 2, 3, 5, 6, or 7 in the special subframe configuration table, placing the SSS and the PSS on the same subframe in the subframe 1 or 6, and placing the PBCH, the PSS and the SSS on the same subframe in the subframe 1 or 6.

In the embodiment of the present disclosure, under the normal CP, for the port 0 or 1, when the special subframe configuration is the special subframe configuration 1, 2, 3, 4, 6, 7, 8 or 9 in the special subframe configuration table, the placing the SSS and the PSS on the same subframe in the subframe 1 or 6 includes: when the special subframe configuration is the special subframe configuration 9 in the special subframe configuration table, placing the SSS on the third or fifth OFDM symbol of the subframe 1 and/or the subframe 6, and placing the PSS on the fifth or sixth OFDM symbol of the subframe 1 and/or the subframe 6; and when the special subframe configuration is the special subframe configuration 1, 2, 3, 4, 6, 7 or 8 in the special subframe configuration table, placing the SSS on the third, fourth or sixth OFDM symbol of the subframe 1 and/or the subframe 6, and placing the PSS on the fourth, sixth or seventh OFDM symbol of the subframe 1 and/or the subframe 6; wherein, the SSS and the PSS are located on different OFDM symbols in the subframe 1 and/or the subframe 6.

In the embodiment of the present disclosure, under the normal CP, for the port 2 or 3, when the special subframe configuration is the special subframe configuration 1, 2, 3, 4, 6, 7, 8 or 9 in the special subframe configuration table, the placing the SSS and the PSS on the same subframe in the subframe 1 or 6 includes: when the special subframe configuration is the special subframe configuration 9 in the special subframe configuration table, placing the SSS on the third, fourth or fifth OFDM symbol of the subframe 1 and/or the subframe 6, and placing the PSS on the fourth, fifth or sixth OFDM symbol of the subframe 1 and/or the subframe 6; and when the special subframe configuration is the special subframe configuration 1, 2, 3, 4, 6, 7 or 8 in the special subframe configuration table, placing the SSS on the third, fourth, fifth or sixth OFDM symbol of the subframe 1 and/or the subframe 6, and placing the PSS on the fourth, fifth, sixth or seventh OFDM symbol of the subframe 1 and/or the subframe 6; wherein, the SSS and the PSS are located on different OFDM symbols in the subframe 1 and/or the subframe 6.

In the embodiment of the present disclosure, under the extended CP, for the ports 0 and 1, when the special subframe configuration is the special subframe configuration 1, 2, 3, 5, 6 or 7 in the special subframe configuration table, the placing the SSS and the PSS on the same subframe in the subframe 1 or 6 includes: when the special subframe configuration is the special subframe configuration 7 in the special subframe configuration table, placing the SSS on the fourth OFDM symbol of the subframe 1 and/or the subframe 6, and placing the PSS on the fifth OFDM symbol of the subframe 1 and/or the subframe 6; and when the special subframe configuration is the special subframe configuration 1, 2, 3, 5 or 6 in the special subframe configuration table, placing the SSS on the third or fifth OFDM symbol of the subframe 1 and/or the subframe 6, and placing the PSS on the fifth or sixth OFDM symbol of the subframe 1 and/or the subframe 6; wherein, the SSS and the PSS are located on different OFDM symbols in the subframe 1 and/or the subframe 6.

In the embodiment of the present disclosure, under the extended CP, for the ports 2 and 3, when the special subframe configuration is the special subframe configuration 1, 2, 3, 5, 6 or 7 in the special subframe configuration table, the placing the SSS and the PSS on the same subframe in the subframe 1 or 6 includes: when the special subframe configuration is the special subframe configuration 7 in the special subframe configuration table, placing the SSS on the third or fourth OFDM symbol of the subframe 1 and/or the subframe 6, and placing the PSS on the fourth or fifth OFDM symbol of the subframe 1 and/or the subframe 6; and when the special subframe configuration is the special subframe configuration 1, 2, 3, 5 or 6 in the special subframe configuration table, placing the SSS on the third, fourth or fifth OFDM symbol of the subframe 1 and/or the subframe 6, and placing the PSS on the fourth, fifth or sixth OFDM symbol of the subframe 1 and/or the subframe 6; wherein, the SSS and the PSS are located on different OFDM symbols in the subframe 1 and/or the subframe 6.

Since the subframe 1 and/or the subframe 6 is a special subframe, which carries other information before being modified, collisions between the SSS and these information should be avoided as much as possible after the modification. However, in a TDD mode, a PDCCH only exists on the first OFDM symbol or the first two OFDM symbols, a PCFICH only exits on the first OFDM symbol, and a PHICH is mapped on a REG that is not used by the PCFICH in a control region. In the case of a conventional PHICH time domain configuration, the PHICH is mapped on the first OFDM symbol of a downlink subframe, which may support a scenario with fewer users. In the case of an extended PHICH time domain resource configuration, each PHICH group is mapped on the first three OFDM symbols of the downlink subframe, and mapped on the first two OFDM symbols in the subframe 1 and the subframe 6 of a MBSFN in a TDD mode for supporting scenarios with a large coverage radius or a large number of users. Since the location of the CRS in the subframe is related to a port number and the OFDM symbol existing in the downlink, the location of the CRS is determined before configuring the SSS, and the location of the CRS in the subframe may be determined by the following formula (3):

$$ l = \begin{cases} 0, N_{\text{symb}}^{\text{DL}} - 3 & \text{if } p \in \{0,1\} \\ 1 & \text{if } p \in \{2,3\} \end{cases} \tag{3} $$

wherein, p is a transmitting port of the CRS, $N_{\text{symb}}^{\text{DL}}$ is a total number of downlink OFDMs contained in one time slot, and 1 is a time domain resource index.

It is derived through the above formula (3) that when the ports are 0 and 1, under the normal CP, when the special subframe configuration is the special subframe configuration 0 and/or the special subframe configuration 5 in the special subframe configuration table, the CRS is placed on the first OFDM symbol of the subframe 1 and/or the subframe 6; when the special subframe configuration is the special subframe configuration 9 in the special subframe configuration table, the CRS is placed on the first and fourth OFDM symbols of the subframe 1 and/or the subframe 6; and when the special subframe configuration is the special subframe configuration 1, 2, 3, 4, 6, 7 or 8 in the special subframe configuration table, the CRS is placed on the first and fifth OFDM symbols of the subframe 1 and/or the subframe 6; under the extended CP, when the special subframe configuration is the special subframe configuration 0 and/or the special subframe configuration 4 in the special subframe configuration table, the CRS is placed on the first OFDM symbol of the subframe 1 and/or the subframe 6; when the special subframe configuration is the special subframe configuration 7 in the special subframe configuration table, the CRS is placed on the first and third OFDM symbols of the subframe 1 and/or the subframe 6; and when the special subframe configuration is the special subframe configuration 1, 2, 3, 5 or 6 in the special subframe configuration table, the CRS is placed on the first and fourth OFDM symbols of the subframe 1 and/or the subframe 6; and when the ports are 2 and 3, the CRS is placed on the second OFDM symbol of the subframe 1 and/or the subframe 6.

In the embodiment of the present disclosure, Fig. 4 is a second flow chart of a paging processing method according to an embodiment of the present disclosure. As shown in Fig. 4, the above method further includes the following step.

In step S402, paging contents of multiple users with the same paging occasion are combined into one paging message, and the paging message is transmitted to the multiple users through a paging channel.

It should be noted that in the embodiments of the present disclosure, there are less than 16 users for a general paging message, but it is not limited thereto.

In this embodiment, a paging processing method is provided, which is applied to a Time Division Duplex (TDD) mode. Fig. 5 is a third flow chart of a paging processing method according to an embodiment of the present disclosure. As shown in Fig. 5, the method includes the following steps.

In step S502, a paging occasion where a user is located is acquired.

In step S504, in the case that the paging occasion is a subframe 0 and/or a subframe 5, a paging message is intercepted (monitored) on a subframe 1 and/or a subframe 6; and a MIB, a SIB1, a SSS and a PSS are acquired on the subframe 1 and/or the subframe 6.

Through the above steps, when the paging occasion is the subframe 0 and/or the subframe 5, the paging message is intercepted and the MIB, the SIB1, the SSS and the PSS are acquired in the subframe 1 and/or the subframe 6, that is, the paging message intercepting or synchronization on the subframe 0 and/or the subframe 5 is shift to the special subframe 1 and/or the subframe 6 by modifying the subframe 0 or 5, so that the subframe 0 and/or the subframe 5 becomes a normal subframe; therefore, the subframe 0 and/or the subframe 5 may be set as other subframes, which solves the problem that the subframe configuration cannot satisfy special demands in the transmission technology in the TDD mode in the related art, configures more subframes as special subframes to satisfy the special demands, and improves the resource utilization of the subframe.

It should be noted that the above special demands may be demands on enhanced videos, and may also be demands on enhanced audios, but are not limited thereto.

In an optional embodiment, the subframe 1 and/or the subframe 6 may be used as a Multicast Broadcast Single Frequency Network (MBSFN) subframe, i.e., the subframe 1 and/or the subframe 6 may be configured as an MBSFN subframe to satisfy the demands on enhanced videos, and can increase a configuration rate of the MBSFN subframe, thereby improving the resource utilization of the eMBMS.

It should be noted that the above paging occasion of the user may be obtained by the following formula: $i\_s =$ floor(UE_ID/N) mod $N_S$; wherein, $i\_s$ represents an index number of the paging occasion, $N_S$ represents a larger value of 1 and $N_b/T$, $N_b$ is $4*T$ which represents that each radio frame has four subframes used for intercepting paging, and T is a discontinuous reception cycle of the user; UE_ID represents a user identity; N represents a smaller value of 1 and $N_b$; and floor (UE_ID/N) represents the largest integer value less than UE_ID/N;
when $i\_s$ is 0 and $N_S$ is 4, the paging occasion is the subframe 0;
when $i\_s$ is 1 and $N_S$ is 4, the paging occasion is the subframe 1;
when $i\_s$ is 2 and $N_S$ is 4, the paging occasion is the subframe 5; and
when $i\_s$ is 3 and $N_S$ is 4, the paging occasion is the subframe 6.

In an embodiment of the present application, in the case that the paging occasion in step S504 is the subframe 0 and/or the subframe 5, the intercepting the paging message on the subframe 1 and/or the subframe 6 may be expressed at follows: when $i\_s$ is 0 and $N_S$ is 4, setting $i\_s$ to be 1 or 3; and when $i\_s$ is 2 and $N_S$ is 4, setting $i\_s$ to be 3 or 1; wherein, $i\_s$ represents an index number of the paging occasion, $N_S$ represents a larger value of 1 and $N_b/T$, $N_b$ is $4*T$ which represents that each radio frame has four subframes used for intercepting paging, and T is a discontinuous reception cycle of the user; when $i\_s$ is 0 and $N_S$ is 4, the paging occasion is the subframe 0; when $i\_s$ is 1 and $N_S$ is 4, the paging occasion is the subframe 1; when $i\_s$ is 2 and $N_S$ is 4, the paging occasion is the subframe 5; and when $i\_s$ is 3 and $N_S$ is 4, the paging occasion is the subframe 6. The paging message is intercepted on a paging occasion indicated by Ns=4 and the set $i\_s$ together. That is, the modified paging occasion is the subframe 1 and/or the subframe 6, and the paging message is intercepted on the subframe 1 and/or the subframe 6. This configuration process is that the user that shall be paged by the subframe 0 is changed to be monitored on the subframe 1 and/or the subframe 6, and the user that shall be monitored and paged by the subframe 5 is monitored by the subframe 6 (or subframe 1). The subframe 0 and/or the subframe 5 is vacated, so that the subframe 0 and/or the subframe 5 is configured as the MBSFN subframe.

Because the subframe 0 or 5 plays the role of sending the Secondary Synchronization Signal (SSS) and the MIB information excluding the role of paging, the synchronization effect is shift to the subframe 1 or the subframe 6 so as to better vacate the subframe 0 or the subframe 5, so that the user may acquire a Physical Broadcast Channel (PBCH) and the SSS on the subframe 1 and/or the subframe 6. In an optional embodiment, it may be expressed as follows: acquiring the PBCH, the SSS and the PSS according to location information of the PBCH and the SSS in the subframe 1 and/or the subframe 6, and acquiring the MIB according to the acquired PBCH.

In an embodiment of the present application, the location information of the PBCH, the SSS and the PSS in the subframe 1 and/or the subframe 6 includes at least one of the following: the SSS being located on an OFDM symbol before an OFDM symbol where the PSS is located; and the SSS being located on an OFDM symbol after the OFDM symbol where the PSS is located.

It should be noted that the SSS being located on the OFDM symbol before the OFDM of the subframe where the PSS is located is for the compatibility with the forward search in the related art, but is not limited thereto, and the SSS being located on the OFDM symbol after the OFDM symbol of the subframe where the PSS is located may adapt to the development of backward search.

In an embodiment of the present application, the location information of the PBCH, the SSS and the PSS in the subframe 1 and/or the subframe 6 may include:

under a normal CP, for a port 0, a port 1, a port 2, or a port 3, when a special subframe configuration is a special subframe configuration 0 and/or a special subframe configuration 5 in a special subframe configuration table in 3GPP TS 36.211 V12.7.0 22 September 2015, the PSS and the SSS being located on different subframes in the subframe 1 or 6, and the PBCH, the PSS and the SSS being located on different subframes in the subframe 1 or 6; and when the special subframe configuration is a special subframe configuration 1, 2, 3, 4, 6, 7, 8 or 9 in the special subframe configuration table, the SSS and the PSS being located on the same subframe in the subframe 1 or 6, and the PBCH, the PSS and the SSS being located on the same subframe in the subframe 1 or 6; and under an extended CP, for the port 0, the port 1, the port 2, or the port 3, when the special subframe configuration is the special subframe configuration 0 and/or the special subframe configuration 4 in the special subframe configuration table, the PSS and the SSS being located on different subframes in the subframe 1 or 6, and the PBCH, the PSS and the SSS being located on different subframes in the subframe 1 or 6; and when the special subframe configuration is the special subframe configuration 1, 2, 3, 5, 6, or 7 in the special subframe configuration table, the SSS and the PSS being located on the same subframe in the subframe 1 or 6, and the PBCH, the PSS and the SSS being located on the same subframe in the subframe 1 or 6.

In an embodiment of the present application, under the normal CP, for the port 0 or 1, when the special subframe configuration is the special subframe configuration 1, 2, 3, 4, 6, 7, 8 or 9 in the special subframe configuration table, the SSS and the PSS being located on the same subframe in the subframe 1 or 6 may include:

when the special subframe configuration is the special subframe configuration 9 in the special subframe configuration table, the SSS being located on the third or fifth OFDM symbol of the subframe 1 and/or the subframe 6, and the PSS being placed on the fifth or sixth OFDM symbol of the subframe 1 and/or the subframe 6; and when the special subframe configuration is the special subframe configuration 1, 2, 3, 4, 6, 7 or 8 in the special subframe configuration table, the SSS being located on the third, fourth or sixth OFDM symbol of the subframe 1 and/or the subframe 6, and the PSS being located on the fourth, sixth or seventh OFDM symbol of the subframe 1 and/or the subframe 6; wherein, the SSS and the PSS are located on different OFDM symbols in the subframe 1 and/or the subframe 6.

In the embodiment of the present disclosure, under the normal CP, for the port 2 or 3, when the special subframe configuration is the special subframe configuration 1, 2, 3, 4, 6, 7, 8 or 9 in the special subframe configuration table, the placing the SSS and the PSS on the same subframe in the subframe 1 or 6 includes:

when the special subframe configuration is the special subframe configuration 9 in the special subframe configuration table, the SSS being located the third, fourth or fifth OFDM symbol of the subframe 1 and/or the subframe 6, and the PSS being located on the fourth, fifth or sixth OFDM symbol of the subframe 1 and/or the subframe 6; and when the special subframe configuration is the special subframe configuration 1, 2, 3, 4, 6, 7 or 8 in the special subframe configuration table, the SSS being located on the third, fourth, fifth or sixth OFDM symbol of the subframe 1 and/or the subframe 6, and the PSS being located on the fourth, fifth, sixth or seventh OFDM symbol of the subframe 1 and/or the subframe 6; wherein, the SSS and the PSS are located on different OFDM symbols in the subframe 1 and/or the subframe 6.

In an embodiment of the present application, under the extended CP, for the ports 0 and 1, when the special subframe configuration is the special subframe configuration 1, 2, 3, 5, 6 or 7 in the special subframe configuration table, the SSS and the PSS being located on the same subframe in the subframe 1 or 6 includes:

when the special subframe configuration is the special subframe configuration 7 in the special subframe configuration table, the SSS being located on the fourth OFDM symbol of the subframe 1 and/or the subframe 6, and the PSS being located on the fifth OFDM symbol of the subframe 1 and/or the subframe 6; and
when the special subframe configuration is the special subframe configuration 1, 2, 3, 5 or 6 in the special subframe configuration table, the SSS being located on the third or fifth OFDM symbol of the subframe 1 and/or the subframe 6, and the PSS being located on the fifth or sixth OFDM symbol of the subframe 1 and/or the subframe 6; wherein, the SSS and the PSS are located on different OFDM symbols in the subframe 1 and/or the subframe 6.

In the embodiment of the present disclosure, under the extended CP, for the ports 2 and 3, when the special subframe configuration is the special subframe configuration 1, 2, 3, 5, 6 or 7 in the special subframe configuration table, the placing the SSS and the PSS on the same subframe in the subframe 1 or 6 includes:

when the special subframe configuration is the special subframe configuration 7 in the special subframe configuration table, the SSS being located on the third or fourth OFDM symbol of the subframe 1 and/or the subframe 6, and the PSS being located on the fourth or fifth OFDM symbol of the subframe 1 and/or the subframe 6; and
when the special subframe configuration is the special subframe configuration 1, 2, 3, 5 or 6 in the special subframe configuration table, the SSS being located on the third, fourth or fifth OFDM symbol of the subframe 1 and/or the subframe 6, and the PSS being located on the fourth, fifth or sixth OFDM symbol of the subframe 1 and/or the subframe 6; wherein, the SSS and the PSS are located on different OFDM symbols in the subframe 1 and/or the subframe 6.

The locations of the PBCH, the SSS and the PSS above may be set according to actual conditions, but are not limited to the location relationship given in the above embodiments. The setting of the location relationship in the above optional embodiments is the same as the setting manner in the above embodiment shown in Fig. 3, and will not be elaborated herein.

In the embodiment of the present disclosure, the intercepting the paging message on the subframe 1 and/or the subframe 6 in step S504 may include: intercepting a Physical Downlink Control Channel (PDCCH) of the subframe 1 and/or the subframe 6; and acquiring the paging message on a Physical Downlink Shared Channel (PDSCH) on the subframe 1 and/or the subframe 6 according to a Resource Block (RB) distribution mode and a Modulation and Coding Scheme (MCS) indicated by the PDCCH.

In the embodiment of the present disclosure, after step S504, the above method further includes: determining whether the paging message contains an identity of the user; if the paging message contains the identity of the user, sending a paging response message to a base station where the user is located; otherwise, continuing to intercept the paging message after a predetermined time.

It should be noted that the above identity of the user may be UE_ID, which may either be an IMSI, or a S-TMSI distributed by a MME.

In the embodiment of the present disclosure, the above intercepting manner may be intercepting the paging message at a corresponding paging location within each intercepting cycle.

The present application is further illustrated hereinafter with reference to the optional embodiments.

The embodiments of the present disclosure provide an optional paging processing method and a paging intercepting method, wherein the paging processing method may be applied to a network side, which may be a base station, while the paging intercepting method may be applied to a user side, which may be a terminal

It may be known from the paging sub-pattern table as shown in Table 1 that the paging subframes 1, 6 appear when $N_S$ =4, i_s=1, and i_s=3. Ns=max(1, nB/T)=4, means that nB/T=4, then a parameter regarding nB in SIB2 should be set as 4T. According to the related technical solution, N=min(T, nB), i.e., N=1, while it is learn from the above formula that i_s = floor(UE_ID/N) mod Ns= floor(UE_ID) mod 4, and radio frame: SFN mod T= (T div N)*(UE_ID mod N)= (T)*(UE_ID).

At the network side, if i_s = floor(UE_ID/N) mod Ns= floor(UE_ID) mod 4=0, then i_s is set to be 1 (or set to be 3); if i_s = floor(UE_ID/N) mod Ns= floor(UE_ID) mod 4=2, then i_s is set to 3 (or set to be 1); that is, the user that shall be paged by the subframe 0 is changed to be paged on the subframe 1 and/or the subframe 6, and the user that shall be monitored and paged by the subframe 5 is changed to be paged on the subframe 1 and/or the subframe 6 (which is equivalent to the paging processing method according to the embodiment as shown in Fig. 3).

At the UE side, if i_s = floor(UE_ID/N) mod Ns= floor(UE_ID) mod 4=0, then i_s is set to be 1 (or set to be 3); if i_s = floor(UE_ID/N) mod Ns= floor(UE_ID) mod 4=2, then i_s is set to 3 (or set to be 1); that is, the user, the paging of which shall be intercepted on the subframe 0, is put to be intercepted on the subframe 1 and/or the subframe 6, and the user, the paging of which shall be intercepted on the subframe 5, is put to be intercepted on the subframe 1 and/or the subframe 6 (which is equivalent to the above paging processing method according to the embodiment as shown in Fig. 5).

In the optional embodiments of the present application, the locations of the SSS, the PSS and the PBCH may be designed, and a brief introduction is given below.

Table 2 is a configuration table of special subframes. As shown in Table 2, there are nine special subframe configurations in a TDD. For example, a Downlink Pilot Time Slot (DwPTS) of a configuration 0 only includes three OFDM symbols for both a normal CP and an extended CP; therefore, for such a configuration, the PSS is put after the last OFDM symbol on a downlink portion of the special subframe, and the SSS shall not be put in this special subframe, and has to be forwards shift by one subframe, i.e., put on the subframes 0 and 5, which is as shown in Table 2.

Table 2

| Special subframe configuration | Normal cyclic prefix in downlink | | | Extended cyclic prefix in downlink | | |
|---|---|---|---|---|---|---|
| | DwPTS | Uplink Pilot Time Slot (UpPTS) | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_s$ | $2192 \cdot T_s$ | $2560 \cdot T_s$ | $7680 \cdot T_s$ | $2192 \cdot T_s$ | $2560 \cdot T_s$ |
| 1 | $19760 \cdot T_s$ | | | $20480 \cdot T_s$ | | |
| 2 | $21952 \cdot T_s$ | | | $23040 \cdot T_s$ | | |
| 3 | $24144 \cdot T_s$ | | | $25600 \cdot T_s$ | | |
| 4 | $26336 \cdot T_s$ | | | $7680 \cdot T_s$ | | |
| 5 | $6592 \cdot T_s$ | $4384 \cdot T_s$ | $5120 \cdot T_s$ | $20480 \cdot T_s$ | $4384 \cdot T_s$ | $5120 \cdot T_s$ |
| 6 | $19760 \cdot T_s$ | | | $23040 \cdot T_s$ | | |
| 7 | $21952 \cdot T_s$ | | | $12800 \cdot T_s$ | | |
| 8 | $24144 \cdot T_s$ | | | - | - | - |
| 9 | $13168 \cdot T_s$ | | | - | - | - |

In the case where the UE uses a mobile device for viewing videos in real time, downlink downloading needs are much larger than uplink uploading needs. In such a scenario, it is inappropriate to use such a configuration with few downlink resources. It is not recommended to use this configuration for a scenario needing a large number of downlink resources.

It may be seen from Table 2 that for the normal CP, the downlink resources of the configuration 0 and the configuration 5 have three OFDM symbols only, and for the extended CP, the downlink resources of the configuration 0 and the configuration 4 have three OFDM symbols only. None of these configurations are suitable for the case of only using one subframe for synchronization.

A synchronization subframe suitable for simultaneously sending the PSS and the SSS in one subframe is designed as follows: excluding the case that the special subframe contains three OFDM symbol downlink resources only, the remaining configurations have at least six OFDM symbols; then collisions among the CRS/PDCCH/PCFICH/PHICH should be avoided, for example, for the normal CP, the SSS may be put on the third OFDM symbol (in a TDD mode, a PDCCH only exists on the first OFDM symbol or the first two OFDM symbols, a PCFICH only exits on the first OFDM symbol, and a PHICH is mapped on a REG that is not used by the PCFICH in a control region. In the case of a conventional PHICH time domain configuration, the PHICH is mapped on the first OFDM symbol of a downlink subframe, which may support a scenario with fewer users. In the case of an extended PHICH time domain resource configuration, each PHICH group is mapped on the first three OFDM symbols of the downlink subframe (on the first two OFDM symbols of subframes 1 and 6 of MBSFN and TDD) for supporting scenarios with a large coverage radius or a large number of users.

The feasibility of each configuration is analyzed in details in the following. It may be known from a LTE protocol 36.211 that the CRS needs to avoid the PSS and the SSS. In case of being sent via the ports 0, 1, then a first reference symbol is located on a first OFDM symbol of every 0.5ms time slot and a second reference symbol is located on a place where 3 is subtracted from a total number of downlink symbols; reference may be made to a following formula (4), wherein K is a frequency resource index, and 1 is a time domain resource index.

$$k = 6m + (v + v_{\text{shift}}) \bmod 6$$

$$l = \begin{cases} 0, N_{\text{symb}}^{\text{DL}} - 3 & \text{if } p \in \{0,1\} \\ 1 & \text{if } p \in \{2,3\} \end{cases}$$

$$m = 0,1,...,2 \cdot N_{\text{RB}}^{\text{DL}} - 1$$

$$m' = m + N_{\text{RB}}^{\text{max,DL}} - N_{\text{RB}}^{\text{DL}}$$

$$\text{formula (4)}$$

Where, P denotes a port, m denotes an allocated downlink starting resource block, and $v, v_{\text{shift}}$ denotes frequency domain locations of different reference signals respectively.

In case of being sent via the ports 2, 3, only the second OFDM symbol is used for sending.

For the ports 0, 1, when the downlink OFDM symbols in the special subframe configuration are less than or equal to 3 (configurations 0 and 5 in the normal CP), only the first OFDM symbol sends CRS. When the downlink OFDM symbols are greater than 3, the location of the second OFDM symbol needs to be obtained by calculation.

For the ports 0 and 1, under the normal CP:

for the configuration 0, there are only three downlink OFDM symbols; therefore, the CRS only exits on the first OFDM symbol;
for the configuration 9, there are six downlink OFDM symbols; therefore, the CRS exits on the first and fourth OFDM symbols according to the formula (4);
for the configurations 1 and 6, there are nine downlink OFDM symbols, and there are seven OFDM symbols in the time slot 0; therefore, the CRS exits on the first and fifth OFDM symbols;
for the configurations 2 and 7, there are 10 downlink OFDM symbols, and there are seven OFDM symbols in the time slot 0; therefore, the CRS exits on the first and fifth OFDM symbols;
for the configurations 3 and 8, there are 11 downlink OFDM symbols, and there are seven OFDM symbols in the time slot 0; therefore, the CRS exits on the first and fifth OFDM symbols; and
for the configuration 4 , there are 12 downlink OFDM symbols, and there are seven OFDM symbols in the time slot 0; therefore, the CRS exits on the first and fifth OFDM symbols.

It may be thus seen that under the normal CP:

the configurations 0 and 5 are not applicable to the designed in which the PSS and the SSS are in the same special subframe;
for the configuration 9, the SSS may be placed on the third/fifth OFDM symbol, and the PSS may be placed on the fifth/sixth symbol;
for the configurations 1 and 6, the SSS may be placed on the third/fourth/sixth OFDM symbol, and the PSS may be placed on the fifth/fourth/seventh symbol;
for the configurations 2 and 7, the SSS may be placed on the third/fourth/sixth OFDM symbol, and the PSS may be placed on the fifth/fourth/seventh symbol;
for the configurations 3 and 8, the SSS may be placed on the third/fourth/sixth OFDM symbol, and the PSS may be placed on the fifth/fourth/seventh symbol; and
for the configuration 4, the SSS may be placed on the third/fourth/sixth OFDM symbol, and the PSS may be placed on the fifth/fourth/seventh symbol.

For the ports 0 and 1, under the extended CP:

for the configurations 0 and 4, there are only three downlink OFDM symbols; therefore, the CRS only exits on the first OFDM symbol;

for the configuration 7, there are five downlink OFDM symbols; therefore, the CRS exits on the first and third OFDM symbols according to the formula (4);

for the configurations 1 and 5, there are eight downlink OFDM symbols, and there are six OFDM symbols in the time slot 0; therefore, the CRS exits on the first and fourth OFDM symbols;

for the configurations 2 and 6, there are nine downlink OFDM symbols, and there are six OFDM symbols in the time slot 0; therefore, the CRS exits on the first and fourth OFDM symbols; and

for the configuration 3, there are 10 downlink OFDM symbols, and there are six OFDM symbols in the time slot 0; therefore, the CRS exits on the first and fourth OFDM symbols.

It may be thus seen that under the extended CP:

the configurations 0 and 4 are not applicable to be designed with that the PSS, and the SSS are in the same special subframe;

for the configuration 7, the SSS may be placed on the fourth OFDM symbol, and the PSS may be placed on the fifth symbol;

for the configurations 1 and 5, the SSS may be placed on the third/fifth OFDM symbol, and the PSS may be placed on the fifth/sixth symbol;

for the configurations 2 and 6, the SSS may be placed on the third/fifth OFDM symbol, and the PSS may be placed on the fifth/sixth symbol; and

for the configuration 3, the SSS may be placed on the third/fifth OFDM symbol, and the PSS may be placed on the fifth/sixth symbol.

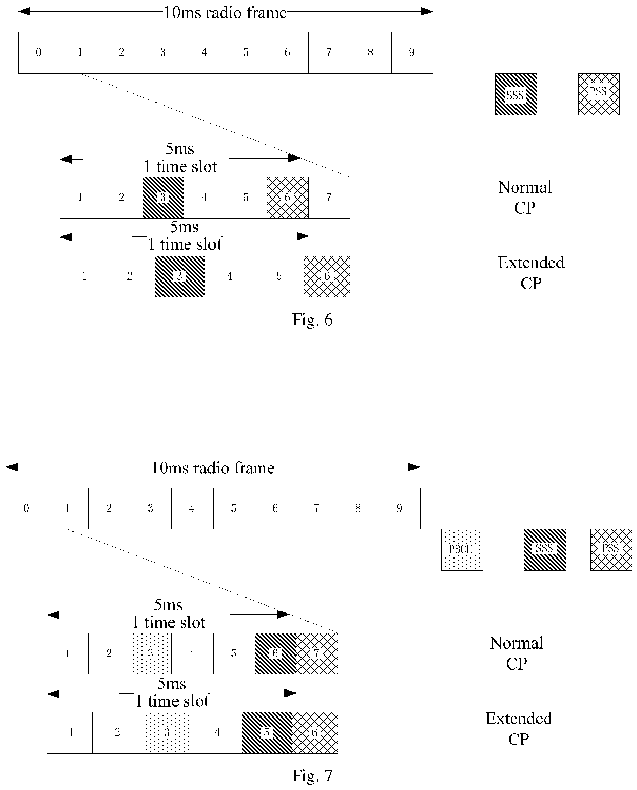

According to the above analysis, in order to maintain consistency, the PSS is placed on the sixth OFDM symbol in the configurations where the number of the downlink OFDM symbols in the special subframe is greater than five, the SSS is determined according to the length of the CP, and placing the PSS and the SSS close to each other is beneficial for coherent detection; therefore, under the normal CP, the SSS is designed to be placed on the third OFDM symbol; and under the extended CP, the SSS is placed on the third OFDM symbol. Fig. 6 is a schematic diagram illustrating a time slot structure that the SSS and the PSS are in the same subframe in the TDD mode according to an optional embodiment of the present application.

The design of placing the PBCH, the SSS and the PSSS in the same subframe is as follows.

According to 36.211 and 36.331, it is known that the PBCH carrying MIB information is mapped on the first four OFDMs of the second time slot of the subframe 0 of a radio frame, while SIB1 information is scheduled to be mapped onto the PDSCH in the subframe 5. Therefore, none of the subframes 0 and 5 can be configured as MBSFN subframes. In case of satisfying a 5G requirement to redesign the subframes so as to satisfy that the resource utilization of the eMBMS exceeds 60%, the location of the subframe carrying the MIB, SIB1 needs to be re-considered. If the MIB and the SIB1 are placed in the special subframes 1 and 6, then the resource utilization of the eMBMS can be up to 80%.

If the PBCH carrying the MIB information is placed in the subframe 1, then at least eight OFDM symbols are needed for the downlink portion of the subframe 1 to avoid the CRS/PDCCH/PCFICH/PHICH, and the SSS, the PSS. It may be seen from Table 2 that the special subframe configurations satisfying the above requirement are that: for the normal CP, the configurations are 1, 2, 3, 4, 6, 7 and 8; while for the extended CP, the configurations are 1, 2, 3, 5 and 6.

If the SIB1 is placed in the special subframe 6, a PDSCH is needed to avoid the CRS/PDCCH/PCFICH/PHICH, and the SSS and the PSS, and then at least eight OFDMs are needed to be used as downlink resources. It may be seen from Table 2 that the special subframe configurations satisfying the above requirement are that: for the normal CP, the configurations are 1, 2, 3, 4, 6, 7 and 8; while for the extended CP, the configurations are 1, 2, 3, 5 and 6.

According to the above analysis, in order to design the PBCH and the PDSCH carrying SIB1 as well as the synchronization SCH into the same special subframe, at least eight downlink OFDM symbols of the special subframe are needed, i.e., seven configurations including 1, 6, 2 7, 3, 8 and 4 under the normal CP and five configurations including 1, 5, 2, 6 and 3 under the extended CP.

In order to maintain consistency, it may be designed to place the PSS on the last OFDM symbol of the time slot. For the normal CP, the PBCH is placed on the third OFDM symbol of the subframe 1, the SSS is placed on the sixth OFDM symbol, and the PSS is placed on the seventh OFDM symbol. For the extended CP, the PBCH is placed on the third OFDM symbol, the SSS is placed on the fifth OFDM symbol, and the PSS is placed on the sixth OFDM symbol. Fig. 7 is a schematic diagram illustrating a time slot structure that an SSS and a PSS are in the same subframe in a TDD mode according to an optional embodiment of the present application. The PDSCH carrying the SIB1 may be placed in the RE excluding CRS/PDCCH/PCFICH/PHICH (for the bandwidth less than 1.4M, the PDSCH cannot be placed in the subframes 1 and 6 to avoid collision with the PDCCH); if much SIB1 information is carried, the configurations with symbols greater than 8 may be selected.

The optional embodiments are further explained with reference to the specific application scenarios hereinafter.

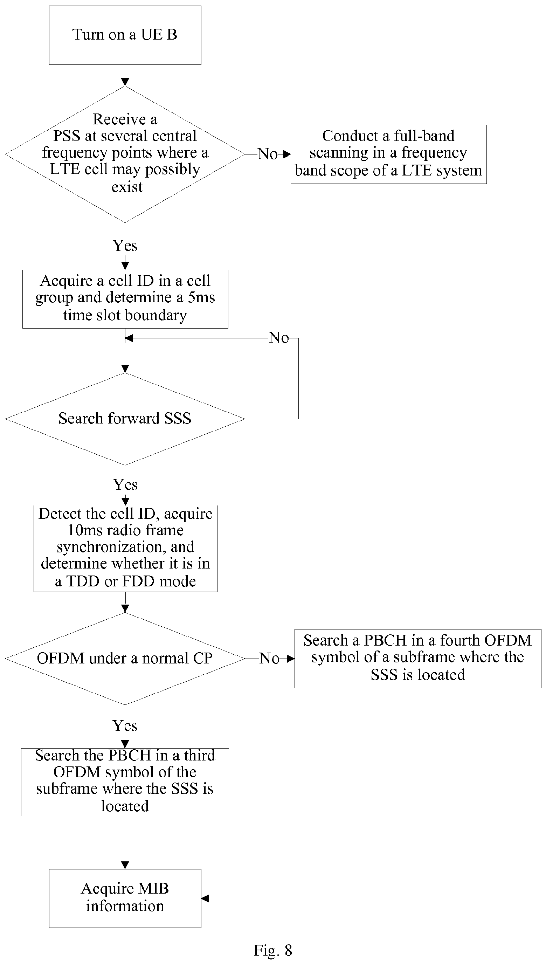

A first scenario is a football match site in real-time live telecast, which needs a lot of network resources for data transmission. A user B turns on for cell search. The user B may recognize the time slot structure of Fig. 7 that the PSS, the SSS and the PBCH are in the same subframe. Fig. 8 is a cell search flow chart according to an optional embodiment of the present application. As shown in Fig. 8, the above flow includes the following steps.

In step 1, at the football match site, a UE B is turned on and begins to search a synchronization signal. After being turned on, the UE B receives a signal (PSS) at several central frequency points where a LTE cell may possibly exist, and determines whether a cell may exist around the frequency points by using the strength of the received signal. If the UE saves the frequency point and operator information during last shutdown, then it will try in the last resident cell firstly while being turned on; if the UE does not save the frequency point and operator information during last shutdown, then it needs to conduct a full-band scanning in a frequency band range divided to a LTE system, and try at the frequency point with a stronger signal.

In step, 5 ms time slot synchronization is performed to detect a cell ID: a PSS is collected around the frequency point, which occupies six RBs of a central frequency band; therefore, it can be compatible with all system bandwidths. The signal is repeated with a cycle of 5ms, is sent in special subframes 1 and 6, is a ZC sequence, and has a very strong correlation, and can therefore be detected and received directly, whereby the cell ID in a cell group may be determined simultaneously with a 5ms time slot boundary, and meanwhile, the length of the CP may be known by checking the preference; because the signal is repeated in every 5ms, the frame synchronization cannot be obtained in this step.

In step 3, 10 ms synchronization is performed, the cell group ID is detected, and frame synchronization is performed: after the 5 ms time slot synchronization, a SSS is searched forward based on the PSS. The SSS consists of two random sequences. The mappings of the first half frame and the last half frame are opposite. Therefore, as long as two SSSs are received, a 10 ms boundary may be determined, so as to achieve the purpose of frame synchronization. Since the SSS signal carries the cell group ID, it may be combined with the PSS to obtain a physical layer ID; in this way, structure information of the downlink reference signal may be further obtained. The contents sent by the PSS twice are the same in each radio frame, while the contents sent by the SSS twice in each radio frame are different. 5 ms timing is obtained firstly by solving the PSS, and 10 ms timing of the radio frame may be obtained by solving the SSS.

In step 4, the UE B finds the SSS in an OFDM symbol before the one in which the PSS is found, indicating that the subframes 0 and 5 of this cell may be configured as MBSFN subframes. It may also be known according to the information of Fig. 7 and the location of the PBCH that whether it is a normal CP or an extended CP may be learn through step 2. If it is the normal CP, the PBCH is located on the third OFDM symbol of the subframe where the SSS is located. If it is the extended CP, the PBCH is located on the fourth OFDM symbol of the subframe where the SSS is located, and the MIB information may be obtained as long as the location information of the PBCH is obtained.

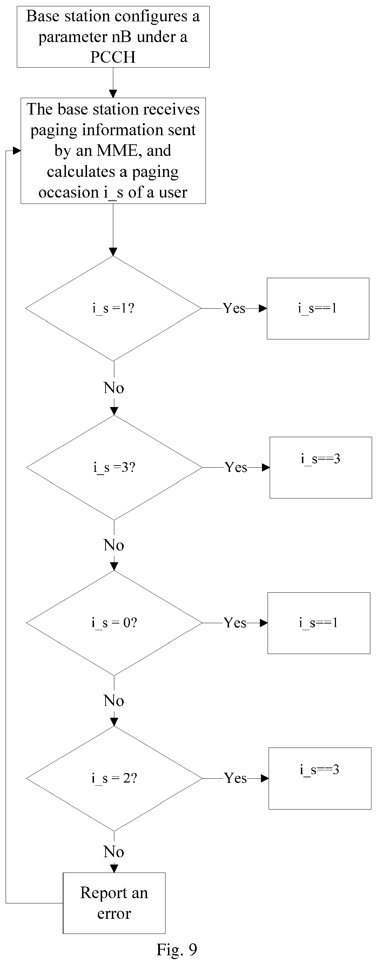

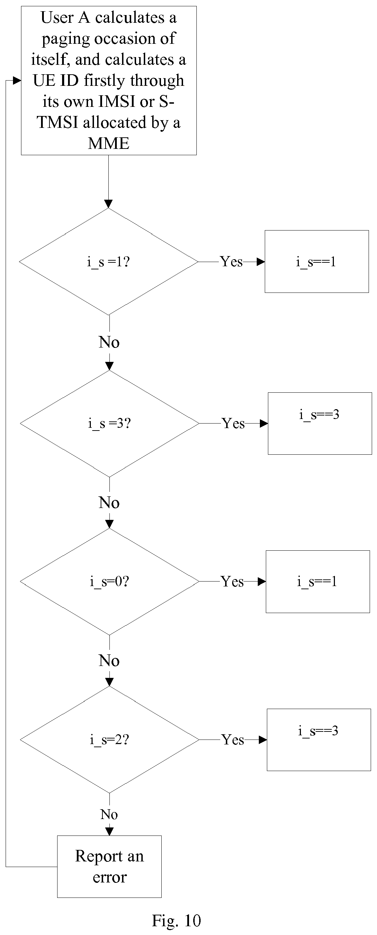

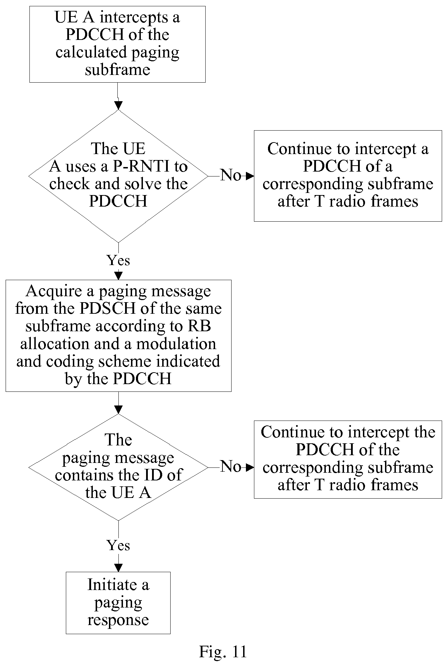

A second scenario is a football match site in real-time live telecast, which needs a lot of network resources for data transmission. A user A calls a user B in an idle state. This scenario includes a page processing method at a base station side and a paging intercepting method at a user side, wherein the user side further includes a flow of initiating a paging response. Fig. 9 is a first flow chart of a paging processing method according to an optional embodiment of the present application; Fig. 10 is a second flow chart of a paging processing method according to an optional embodiment of the present application; and Fig. 11 is a corresponding flow chart of initiating paging at a user side according to an optional embodiment of the present application. As shown in Fig. 9, Fig. 10 and Fig. 11, this optional embodiment includes the following steps.

In step 1, a base station configures parameters nB=4T, 2T, T, T/2, T/4, T/8, T/16 and T/32 under the Paging Control Channel (PCCH), wherein T is a DRX paging cycle of the UE (T may be a default DRX paging cycle of a broadcast cell in the system information, and may also be a specific DRX paging cycle set by the UE according to its own electric quantity and a paging system). The two parameters T and nB are notified to the UE by system information SIB2.

In step 2, the base station receives paging information from the MME, and calculates the paging occasion of each user according to the parameters T and nB and a paged UE ID (the UE ID is a IMSI or a S-TMSI allocated by the MME).

If $i\_s = floor(UE\_ID/N) \bmod Ns = floor(UE\_ID) \bmod 4 = 0$, then $i\_s$ is set to 1 (or set to be 3); if $i\_s = floor(UE\_ID/N) \bmod Ns = floor(UE\_ID) \bmod 4 = 2$, then $i\_s$ is set to 3 (or set to be 1); that is, the user that shall be paged by the sub frame 0 is put to be paged on the subframe 1, and the user that shall be paged by the subframe 5 is put to be paged on the subframe 6; and paging contents of UEs with the same paging occasion are combined into one paging message (there are less than 16 users for one paging message), and the paging message is transmitted to each user through a paging channel.

In step 3, the user A calculates the UE identity (UE ID) through its own International Mobile Subscriber Identity (IMSI) or the SAE Temporary Mobile Station Identifier (S-TMSI) allocated by the MME, that is, $UE\_ID = IMSI \bmod 1024$.

In step 4, the same paging cycle is used to calculate the paging occasion where the UE is located (radio frame + subframe location $i\_s$), radio frame: $SFN \bmod T = (T \ div \ N)*(UE\_ID \bmod N) = (T)*(UE\_ID)$.

If $i\_s = floor(UE\_ID/N) \bmod Ns = floor(UE\_ID) \bmod 4 = 0$, then $i\_s$ is set to 1 (or set to be 3); if $i\_s = floor(UE\_ID/N) \bmod Ns = floor(UE\_ID) \bmod 4 = 2$, then $i\_s$ is set to 3 (or set to be 1); that is, the user that shall be paged by the subframe 0 is put to be intercepted on the subframe 1, and the user that shall be paged by the subframe 5 is put to be intercepted on the subframe 6.

In step 5, in each paging cycle, the UE intercepts the paging message only at a corresponding paging location.

In step 6, the UE A starts to intercept a PDCCH of a corresponding subframe, and uses a P-RNTI to detect the PDCCH; if the PDCCH may be solved, then the user A acquires the paging message from the PDSCH of the same subframe according to Resource Block (RB) allocation and a Modulation and Coding Scheme (MCS) indicated by the PDCCH.

In step 7, if the paging message contains the ID of the UE, then a paging response is initiated; otherwise, the PDCCH of the corresponding subframe is continued to be intercepted after n radio frames, wherein n is an integer.

It should be noted that the above steps 1 to 2 correspond to the embodiments as shown in Figs. 3 to 4, and the steps 3 to 7 correspond to the embodiment as shown in Fig. 5

Through the description of the above embodiments, those skilled in the art can clearly understand that the method according to the above embodiments can be implemented by means of software plus a necessary general hardware platform, or, the method can be also implemented by means of hardware, but in many cases, the former is a better implementation manner. Based on such understanding, the essence of the technical solutions of the embodiments of the present application, or the part contributing to the prior art, may be embodied in the form of a software product which is stored in a storage medium (such as a ROM/RAM, a magnetic disk and an optical disk) including a number of instructions such that a terminal device (which may be a mobile phone, a computer, a server, or a network device, etc.) performs all or part of the method described in each of the embodiments of the present application.

There is also provided a paging processing device in the embodiment. The device is adapted to implement the foregoing embodiments and optional implementation manners, but those which have been described will not be described repeatedly. As used below, the term "module" can implement a combination of software and/or hardware with a predetermined function. Although the apparatus described in the following embodiment is preferably implemented by means of software, the implementation of hardware or a combination of software and hardware is also possible and conceived.

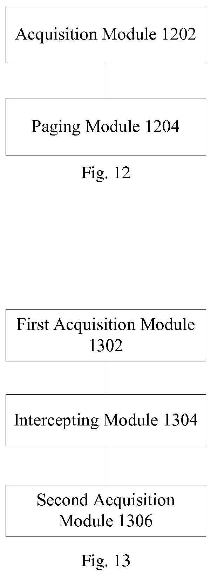

Fig. 12 is a first structure block diagram of a paging processing device according to an embodiment of the present disclosure. As shown in Fig. 12, the device is located on a network side and applied to a Time Division Duplexing (TDD) mode, including:

an acquisition module 1202 adapted to acquire a paging occasion where a user is located; and
a paging module 1204, connected with the above acquisition module 1202 and adapted to, in the case of determining that the paging occasion is a subframe 0 and/or a subframe 5, page the user by using a subframe 1 and/or a subframe 6; wherein, the subframe 1 and/or the subframe 6 contains: a Master Information Block (MIB), a System Information Block (SIB1), a Secondary Synchronization Signal (SSS), and a Primary Synchronization Signal (PSS).

Through the above device, in the case that the paging occasion is the subframe 0 and/or the subframe 5, the paging module 1204 pages the user by using the subframe 1 and/or the subframe 6, wherein the subframe 1 and/or the subframe 6 contains: the MIB, the SIB1, the SSS and the PSS, that is, the device shifts paging or synchronization effect on the subframe 0 and/or the subframe 5 to the subframe 1 and/or the subframe 6 by modifying the subframe 0 or 5, so that the subframe 0 and/or the subframe 5 becomes a normal subframe; therefore, the subframe 0 and/or the subframe 5 may be set as other subframes, which solves the problem that the subframe configuration cannot satisfy special demands in the transmission technology in the TDD mode in the related art, configures more subframes as special subframes to satisfy the special demands, and improves the resource utilization of the subframe.

It should be noted that the above special demands may be demands on enhanced videos, and may also be demands on enhanced audios, but are not limited thereto.

In an optional embodiment, the subframe 1 and/or the subframe 6 above may be used as a Multicast Broadcast Single Frequency Network (MBSFN) subframe, i.e., the subframe 1 and/or the subframe 6 may be configured as an MBSFN subframe to satisfy the demands on enhanced videos, and can increase a configuration rate of the MBSFN subframe, thereby improving the resource utilization of the eMBMS.

In one embodiment of the present application, the above device further includes: a configuration module adapted to configure a PBCH carrying the MIB, the SIB1, the SSS, and the PSS on the subframe 1 and/or the subframe 6.

It should be noted that the configuration module may be connected with the above acquisition module 1202, but may also be connected with other modules, and is not limited thereto, as long as the configuration module can complete a configuration process.

It should be noted that the manner of the acquisition module 1202 for acquiring the paging occasion of the user, the paging manner of the paging module 1204, and the configuration manner of the configuration module are similar to the explanation in the embodiment as shown in above Fig. 3, and will not be elaborated herein.

Fig. 13 is a second structure block diagram of a paging processing device according to an embodiment of the present disclosure. As shown in Fig. 13, the device is located on a network side and applied to a Time Division Duplexing (TDD) mode, including:

a first acquisition module 1302 adapted to acquire a paging occasion where a user is located;

an intercepting module 1304, connected with the first acquisition module 1302 above and adapted to, in the case that the paging occasion is a subframe 0 and/or a subframe 5, intercept a paging message on a subframe 1 and/or a subframe 6; and

a second acquisition module 1306 connected with the intercepting module 1304 above and adapted to acquire a MIB, a SIB1, a SSS and a PSS on the subframe 1 and/or the subframe 6.

Through the above device, when the paging occasion is the subframe 0 and/or the subframe 5 , the intercepting module 1304 intercepts the paging message on the subframe 1 and/or the subframe 6, and the second acquisition module 1306 acquires the MIB, the SIB1, the SSS and the PSS on the subframe 1 and/or the subframe 6, that is, the above device shifts paging message intercepting or synchronization effect on the subframe 0 and/or the subframe 5 to the special subframe 1 and/or the subframe 6 by modifying the subframe 0 or 5, so that the subframe 0 and/or the subframe 5 becomes a normal subframe; therefore, the subframe 0 and/or the subframe 5 may be set as other subframes, which solves the problem that the subframe configuration cannot satisfy special demands in the transmission technology in the TDD mode in the related art, configures more subframes as special subframes to satisfy the special demands, and improves the resource utilization of the subframe.

It should be noted that the above special demands may be demands on enhanced videos, and may also be demands on enhanced audios, but are not limited thereto.

In an optional embodiment, the subframe 1 and/or the subframe 6 may be used as a Multicast Broadcast Single Frequency Network (MBSFN) subframe, i.e., the subframe 1 and/or the subframe 6 may be configured as an MBSFN subframe to satisfy the demands on enhanced videos, and can increase a configuration rate of the MBSFN subframe, thereby improving the resource utilization of the eMBMS.

It should be noted that the manner of the first acquisition module 1302 for acquiring the paging occasion of the user, the paging intercepting manner of the intercepting module 1304, and the configuration of the second acquisition module 1306 for acquiring the information such as SSS are consistent with the explanation in the embodiment as shown in above Fig. 5, and will not be elaborated herein.

It should be noted that the above modules can be implemented by software or hardware. For the latter, it may be implemented by the following manners, but is not limited to this: the above modules are all disposed in the same processor; or, the above modules are respectively disposed in multiple processors.

The embodiments of the present disclosure also provide a computer readable storage medium. Optionally, the above computer readable storage medium in the embodiment may be adapted to store program codes for executing the following steps:

step S1: acquiring a paging occasion where a user is located; and

step S2: in the case of determining that the paging occasion is a subframe 0 and/or a subframe 5, paging the user by using a subframe 1 and/or a subframe 6; and the following information is shift to be transmitted on the subframe 1 and/or the subframe 6: a MIB, a SIB1, a SSS, and a PSS.

Optionally, the above computer readable storage medium in the embodiment may include, but is not limited to any medium that is capable of storing program codes like a USB disk, a Read-Only Memory (ROM), a Random Access Memory (RAM), a mobile hard disk, a magnetic disk or an optical disk.

Optionally, for a specific example in this embodiment, reference may be made to the examples described in the foregoing embodiments and optional embodiments, which will not be elaborated in this embodiment.

It will be apparent to those skilled in the art that the above-described modules or steps of the present application may be implemented by a general purpose computing device which may be focused on a single computing device or distributed over a plurality of computing devices, which may optionally be implemented by a program code executable by the computing device, so that they may be stored in a storage device by the computing device and, in some cases, the steps shown or described may be performed in sequence different from here; or they are separately made into a single integrated circuit module, or multiple modules or steps in them are made into a single integrated circuit module. In this way, the present application is not limited to any particular combination of hardware and software.

Those described above are merely optional embodiment of the present application, but are not intended to limit the present application. The present application may have various modification and changes for those skilled in the art. Any improvements made without departing from the principle of the present application shall all fall within the scope of protection of the present application.

## INDUSTRIAL APPLICABILITY

The embodiments of the present application provide a paging processing method and device, which solves the problem that the subframe configuration cannot satisfy special demands in the transmission technology in the TDD mode in the related art, so as to configure more subframes into especial subframes satisfying the special demands, thus improving the resource utilization of the subframe.

**Claims**

1. A paging processing method, applied to a Time Division Duplexing TDD mode, comprising:

    acquiring (S302) a paging occasion where a user is located; and
    in the case of determining that the paging occasion is at least one of a subframe 0 and a subframe 5, paging (S304) the user by using at least one of a subframe 1 and a subframe 6; the at least one of the subframe 1 and the subframe 6 containing: a Master Information Block MIB, a System Information Block SIB1, a Secondary Synchronization Signal SSS, and a Primary Synchronization Signal PSS,
    wherein the at least one of the subframe 1 and the subframe 6 is used as a Multicast Broadcast Single Frequency Network MBSFN subframe.

2. The method according to claim 1, wherein when the paging occasion is at least one of the subframe 0 and the subframe 5, the paging the user on at least one of the subframe 1 and the subframe 6 comprises at least one of the following:

    when i_s is 0 and $N_S$ is 4, setting i_s to be 1 or 3; and
    when i_s is 2 and $N_S$ is 4, setting i_s to be 3 or 1;
    wherein, i_s represents an index number of the paging occasion, $N_S$ represents a larger value of 1 and $N_b/T$, $N_b$ is 4*T which represents that each radio frame has four subframes used for paging, and T is a discontinuous reception cycle of the user; when i_s is 0 and $N_S$ is 4, the paging occasion is the subframe 0; when i_s is 1 and $N_S$ is 4, the paging occasion is the subframe 1; when i_s is 2 and $N_S$ is 4, the paging occasion is the subframe 5; and when i_s is 3 and $N_S$ is 4, the paging occasion is the subframe 6; and
    paging the user on a paging occasion indicated by Ns=4 and the set i_s together.

3. The method according to claim 1, wherein after paging (S304) the user by using at least one of the subframe 1 and the subframe 6, the method further comprises:
    combining (S402) paging contents of multiple users with the same paging occasion into one paging message, and transmitting the paging message to the multiple users through a paging channel.

4. The method according to claim 1, wherein before acquiring (S302) the paging occasion where the user is located, the method further comprises:
    configuring a Physical Broadcast Channel PBCH carrying the MIB, the SIB1, the SSS, and the PSS on at least one of the subframe 1 and the subframe 6.

5. The method according to claim 4, wherein the configuring the SSS on at least one of the subframe 1 and the subframe 6 comprises:
    configuring the SSS and the PSS to be located on the same subframe, wherein the same subframe is the subframe 1 or the subframe 6; and the SSS and the PSS being located on the same subframe comprises at least one of the following: the SSS being located on an Orthogonal Frequency Division Multiplexing OFDM symbol before an OFDM symbol of a subframe where the PSS is located; and the SSS being located on an OFDM symbol after the OFDM symbol of the subframe where the PSS is located.

6. The method according to claim 4, wherein the configuring the PBCH carrying the MIB on at least one of the subframe 1 and the subframe 6 comprises:
    configuring the PBCH, the SSS and the PSS to be located on the same subframe, wherein the same subframe is the subframe 1 or the subframe 6.

7. The method according to claim 4, wherein the configuring the SSS and the PBCH on at least one of the subframe 1 and the subframe 6 comprises:
    configuring the SSS and the PBCH on at least one of the subframe 1 and the subframe 6 according to a length of a Cyclic Prefix CP and a special subframe configuration table.

8. The method according to claim 7, wherein the configuring the SSS and the PBCH on at least one of the subframe 1 and the subframe 6 according to the length of the Cyclic Prefix CP and the special subframe configuration table comprises:

under a normal CP, for a port 0, a port 1, a port 2, or a port 3, when a special subframe configuration is at least one of a special subframe configuration 0 and a special subframe configuration 5 in the special subframe configuration table, configuring the PSS and the SSS to be placed on different subframes in the subframes 1 and 6, and configuring the PBCH, the PSS and the SSS to be placed on different subframes in the subframes 1 and 6; and when the special subframe configuration is a special subframe configuration 1, 2, 3, 4, 6, 7, 8 or 9 in the special subframe configuration table, placing the SSS and the PSS on the same subframe in the subframe 1 or 6, and placing the PBCH, the PSS and the SSS on the same subframe in the subframe 1 or 6; and under an extended CP, for the port 0, the port 1, the port 2, or the port 3, when the special subframe configuration is at least one of the special subframe configuration 0 and the special subframe configuration 4 in the special subframe configuration table, placing the PSS and the SSS on different subframes in the subframes 1 and 6, and placing the PBCH, the PSS and the SSS on different subframes in the subframes 1 and 6; and when the special subframe configuration is the special subframe configuration 1, 2, 3, 5, 6, or 7 in the special subframe configuration table, placing the SSS and the PSS on the same subframe in the subframe 1 or 6, and placing the PBCH, the PSS and the SSS on the same subframe in the subframe 1 or 6.

9. The method according to claim 8, wherein under the normal CP, for the port 0 or 1, when the special subframe configuration is the special subframe configuration 1, 2, 3, 4, 6, 7, 8 or 9 in the special subframe configuration table, the placing the SSS and the PSS on the same subframe in the subframe 1 or 6 comprises:

when the special subframe configuration is the special subframe configuration 9 in the special subframe configuration table, placing the SSS on the third or fifth Orthogonal Frequency Division Multiplexing OFDM symbol of at least one of the subframe 1 and the subframe 6, and placing the PSS on the fifth or sixth OFDM symbol of at least one of the subframe 1 and the subframe 6; and
when the special subframe configuration is the special subframe configuration 1, 2, 3, 4, 6, 7 or 8 in the special subframe configuration table, placing the SSS on the third, fourth or sixth OFDM symbol of at least one of the subframe 1 and the subframe 6, and placing the PSS on the fourth, sixth or seventh OFDM symbol of at least one of the subframe 1 and the subframe 6; wherein, the SSS and the PSS are located on different OFDM symbols in at least one of the subframe 1 and the subframe 6.

10. The method according to claim 8, wherein under the normal CP, for the port 2 or 3, when the special subframe configuration is the special subframe configuration 1, 2, 3, 4, 6, 7, 8 or 9 in the special subframe configuration table, the placing the SSS and the PSS on the same subframe in the subframe 1 or 6 comprises:

when the special subframe configuration is the special subframe configuration 9 in the special subframe configuration table, placing the SSS on the third, fourth or fifth Orthogonal Frequency Division Multiplexing OFDM symbol of at least one of the subframe 1 and the subframe 6, and placing the PSS on the fourth, fifth or sixth OFDM symbol of at least one of the subframe 1 and the subframe 6; and
when the special subframe configuration is the special subframe configuration 1, 2, 3, 4, 6, 7 or 8 in the special subframe configuration table, placing the SSS on the third, fourth, fifth or sixth OFDM symbol of at least one of the subframe 1 and the subframe 6, and placing the PSS on the fourth, fifth, sixth or seventh OFDM symbol of at least one of the subframe 1 and the subframe 6; wherein, the SSS and the PSS are located on different OFDM symbols in at least one of the subframe 1 and the subframe 6.

11. The method according to claim 8, wherein under the extended CP, for the ports 0 and 1, when the special subframe configuration is the special subframe configuration 1, 2, 3, 5, 6 or 7 in the special subframe configuration table, the placing the SSS and the PSS on the same subframe in the subframe 1 or 6 comprises:

when the special subframe configuration is the special subframe configuration 7 in the special subframe configuration table, placing the SSS on the fourth Orthogonal Frequency Division Multiplexing OFDM symbol of at least one of the subframe 1 and the subframe 6, and placing the PSS on the fifth OFDM symbol of at least one of the subframe 1 and the subframe 6; and
when the special subframe configuration is the special subframe configuration 1, 2, 3, 5 or 6 in the special subframe configuration table, placing the SSS on the third or fifth OFDM symbol of at least one of the subframe 1 and the subframe 6, and placing the PSS on the fifth or sixth OFDM symbol of at least one of the subframe 1 and the subframe 6; wherein, the SSS and the PSS are located on different OFDM symbols in at least one of the subframe 1 and the subframe 6.

**12.** The method according to claim 8, wherein under the extended CP, for the ports 2 and 3, when the special subframe configuration is the special subframe configuration 1, 2, 3, 5, 6 or 7 in the special subframe configuration table, the placing the SSS and the PSS on the same subframe in the subframe 1 or 6 comprises:

when the special subframe configuration is the special subframe configuration 7 in the special subframe configuration table, placing the SSS on the third or fourth Orthogonal Frequency Division Multiplexing OFDM symbol of at least one of the subframe 1 and the subframe 6, and placing the PSS on the fourth or fifth OFDM symbol of at least one of the subframe 1 and the subframe 6; and

when the special subframe configuration is the special subframe configuration 1, 2, 3, 5 or 6 in the special subframe configuration table, placing the SSS on the third, fourth or fifth OFDM symbol of at least one of the subframe 1 and the subframe 6, and placing the PSS on the fourth, fifth or sixth OFDM symbol of at least one of the subframe 1 and the subframe 6; wherein, the SSS and the PSS are located on different OFDM symbols in at least one of the subframe 1 and the subframe 6.

**13.** The method according to claim 7, wherein before configuring the SSS and the PBCH on at least one of the subframe 1 and the subframe 6 according to the length of the Cyclic Prefix CP and the special subframe configuration table, the method comprises:

determining a location of a Cell-specific Reference Signal CRS on at least one of the subframe 1 and the subframe 6 according to the length of the CP and the special subframe configuration table as well as a following formula:

$$ l = \begin{cases} 0, N_{symb}^{DL} - 3 & \text{if } p \in \{0,1\} \\ 1 & \text{if } p \in \{2,3\} \end{cases} $$

wherein, p is a transmitting port of the CRS, $N_{symb}^{DL}$ is a total number of a downlink Orthogonal Frequency Division Multiplexing OFDM contained in one slot, and 1 is a time domain resource index.

**14.** The method according to claim 13, wherein:

when the ports are 0 and 1, under the normal CP, when the special subframe configuration is at least one of the special subframe configuration 0 and the special subframe configuration 5 in the special subframe configuration table, the CRS is placed on the first OFDM symbol of at least one of the subframe 1 and the subframe 6; when the special subframe configuration is the special subframe configuration 9 in the special subframe configuration table, the CRS is placed on the first and fourth OFDM symbols of at least one of the subframe 1 and the subframe 6; and when the special subframe configuration is the special subframe configuration 1, 2, 3, 4, 6, 7 or 8 in the special subframe configuration table, the CRS is placed on the first and fifth OFDM symbols of at least one of the subframe 1 and the subframe 6;

when the ports are 0 and 1, under the extended CP, when the special subframe configuration is at least one of the special subframe configuration 0 and the special subframe configuration 4 in the special subframe configuration table, the CRS is placed on the first OFDM symbol of at least one of the subframe 1 and the subframe 6; when the special subframe configuration is the special subframe configuration 7 in the special subframe configuration table, the CRS is placed on the first and third OFDM symbols of at least one of the subframe 1 and the subframe 6; and when the special subframe configuration is the special subframe configuration 1, 2, 3, 5 or 6 in the special subframe configuration table, the CRS is placed on the first and fourth OFDM symbols of at least one of the subframe 1 and the subframe 6; and

when the ports are 2 and 3, the CRS is placed on the second OFDM symbol of at least one of the subframe 1 and the subframe 6.

**15.** A paging processing method, applied to a Time Division Duplexing TDD mode, comprising:

acquiring (S502) a paging occasion where a user is located;

in the case that the paging occasion is at least one of a subframe 0 and a subframe 5, intercepting (S504) a paging message on at least one of a subframe 1 and a subframe 6; and acquiring a Master Information Block MIB, a System Information Block SIB1, a Secondary Synchronization Signal SSS and a Primary Synchronization Signal PSS on the subframe 1 or 6,

wherein at least one of the subframe 1 and the subframe 6 is used as a Multicast Broadcast Single Frequency Network MBSFN subframe, and

wherein after intercepting (S504) the paging message on at least one of the subframe 1 and the subframe 6, the method further comprises:

determining whether the paging message contains an identity of the user; if the paging message contains the identity of the user, sending a paging response message to a base station where the user is located; otherwise, continuing to intercept the paging message after a predetermined time.

16. The method according to claim 15, wherein in the case that the paging occasion is at least one of the subframe 0 and the subframe 5, the intercepting the paging message on at least one of the subframe 1 and the subframe 6 comprises at least one of the following:

when $i\_s$ is 0 and $N_S$ is 4, setting $i\_s$ to be 1 or 3; and
when $i\_s$ is 2 and $N_S$ is 4, setting $i\_s$ to be 3 or 1;
wherein, $i\_s$ represents an index number of the paging occasion, $N_S$ represents a larger value of 1 and $N_b/T$, $N_b$ is $4*T$ which represents that each radio frame has four subframes used for intercepting paging, and T is a discontinuous reception cycle of the user; when $i\_s$ is 0 and $N_s$ is 4, the paging occasion is the subframe 0; when $i\_s$ is 1 and $N_s$ is 4, the paging occasion is the subframe 1; when $i\_s$ is 2 and $N_s$ is 4, the paging occasion is the subframe 5; and when $i\_s$ is 3 and $N_s$ is 4, the paging occasion is the subframe 6; and
intercepting the paging message on a paging occasion indicated by Ns=4 and the set $i\_s$ together.

17. The method according to claim 15, wherein the intercepting (S504) the paging message on at least one of the subframe 1 and the subframe 6 comprises:

intercepting a Physical Downlink Control Channel PDCCH of at least one of the subframe 1 and the subframe 6; and
acquiring the paging message on a Physical Downlink Shared Channel PDSCH of at least one of the subframe 1 and the subframe 6 according to a Resource Block RB distribution mode and a Modulation and Coding Scheme MCS indicated by the PDCCH.

18. The method according to claim 15, wherein the acquiring the MIB, the SSS and the PSS on at least one of the subframe 1 and the subframe 6 comprises:
acquiring a Physical Broadcast Channel PBCH, the SSS and the PSS according to location information of the PBCH carrying the MIB, the SSS and the PSS in at least one of the subframe 1 and the subframe 6, and acquiring the MIB according to the acquired PBCH.

19. The method according to claim 18, wherein the location information of the PBCH, the SSS and the PSS in at least one of the subframe 1 and the subframe 6 comprises at least one of the following:

the SSS being located on an Orthogonal Frequency Division Multiplexing OFDM symbol before an OFDM symbol of a subframe where the PSS is located; and
the SSS being located on an OFDM symbol after the OFDM symbol of the subframe where the PSS is located.

20. A paging processing device, located on a network side and applied to a Time Division Duplexing TDD mode, comprising:

an acquisition module (1202) adapted to acquire a paging occasion where a user is located; and
a paging module (1204) adapted to, in the case of determining that the paging occasion is at least one of a subframe 0 and a subframe 5, page the user by using at least one of a subframe 1 and a subframe 6;
wherein, the at least one of the subframe 1 and the subframe 6 contains: a Master Information Block MIB), a System Information Block SIB1, a Secondary Synchronization Signal SSS, and a Primary Synchronization Signal PSS, and
wherein the device further comprises:
a configuration module adapted to configure a Physical Broadcast Channel PBCH carrying the MIB, the SIB1, the SSS, and the PSS on at least one of the subframe 1 and the subframe 6.

**Patentansprüche**

1. Paging-Verarbeitungsverfahren, angewandt auf einen Time-Division-Duplexing-, TDD-, Modus, Folgendes umfassend:

   Erfassen (S302) eines Paging-Anlasses, wo sich ein Benutzer befindet, und
   wenn bestimmt wird, dass der Paging-Anlass ein Teil-Frame 0 und/oder ein Teil-Frame 5 ist, Paging (S304) des Benutzers mit Hilfe eines Teil-Frames 1 und/oder eines Teil-Frames 6, wobei der Teil-Frame 1 und/oder der Teil-Frame 6 Folgendes enthalten: einen Master-Informationsblock, MIB, einen Systeminformationsblock, SIB1, ein sekundäres Synchronisationssignal, SSS und ein primäres Synchronisationssignal, PSS, wobei der Teil-Frame 1 und/oder der Teil-Frame 6 als ein Multicast-Broadcast-Single-Frequency-Netzwerk-, MBSFN, Teil-Frame verwendet werden.

2. Verfahren nach Anspruch 1, wobei, wenn der Paging-Anlass der Teil-Frame 0 und/oder der Teil-Frame 05 ist, das Paging des Benutzers auf dem Teil-Frame 1 und/oder dem Teil-Frame 6 mindestens eines des Folgenden umfasst:

   wenn $i\_s$ 0 ist und $N_S$ 4 ist, Einstellen von $i\_s$ auf 1 oder 3 und
   wenn $i\_s$ 2 ist und $N_S$ 4 ist, Einstellen von $i\_s$ auf 3 oder 1,
   wobei $i\_s$ eine Indexzahl des Paging-Anlasses darstellt, $N_S$ einen größeren Wert von 1 und $N_b/T$ darstellt, $N_b$ 4*T ist, was darstellt, dass jeder Funk-Frame vier Teil-Frames aufweist, die für das Paging verwendet werden, und T ein diskontinuierlicher Empfangszyklus des Benutzers ist, wenn $i\_s$ 0 ist und $N_S$ 4 ist, der Paging-Anlass der Teil-Frame 0 ist, wenn $i\_s$ 1 ist und $N_S$ 4 ist, der Paging-Anlass der Teil-Frame 1 ist, wenn $i\_s$ 2 ist und $N_S$ 4 ist, der Paging-Anlass der Teil-Frame 5 ist, und wenn $i\_s$ 3 ist und $N_S$ 4 ist, der Paging-Anlass der Teil-Frame 6 ist, und
   Paging des Benutzers zu einem Paging-Anlass, der durch $N_S=4$ und die eingestellten $i\_s$ zusammen angezeigt wird.

3. Verfahren nach Anspruch 1, wobei das Verfahren nach dem Paging (S304) des Benutzers mit Hilfe des Teil-Frames 1 und des Teil-Frames 6 ferner Folgendes umfasst:

   Kombinieren (S402) von Paging-Inhalten mehrerer Benutzer mit dem gleichen Paging-Anlass zu einer Paging-Nachricht und Übermitteln der Paging-Nachricht durch einen Paging-Kanal an die mehreren Benutzer.

4. Verfahren nach Anspruch 1, wobei das Verfahren vor dem Erfassen (302) des Paging-Anlasses, wo sich ein Benutzer befindet, ferner Folgendes umfasst:
   Konfigurieren eines Physical Broadcast Channel, PBCH, der den MIB, den SIB1, das SSS und das PSS auf dem Teil-Frame 1 und/oder dem Teil-Frame 6 mitführt.

5. Verfahren nach Anspruch 4, wobei das Konfigurieren des SSS auf dem Teil-Frame 1 und/oder dem Teil-Frame 6 Folgendes umfasst:
   Konfigurieren des SSS und des PSS derart, dass sie sich auf dem gleichen Teil-Frame befinden, wobei der gleiche Teil-Frame der Teil-Frame 1 oder der Teil-Frame 6 ist, wobei die Tatsache, dass sich das SSS und das PSS auf dem gleichen Teil-Frame befinden, mindestens eines des Folgenden umfasst: das SSS befindet sich auf einem Orthogonal-Frequency-Division-Multiplexing-, OFDM-, Symbol vor einem OFDM-Symbol eines Teil-Frames, wo sich das PSS befindet, und das SSS befindet sich auf einem OFDM-Symbol nach dem OFDM-Symbol des Teilframes, wo sich das PSS befindet.

6. Verfahren nach Anspruch 4, wobei das Konfigurieren des PBCH, der auf dem Teil-Frame 01 und/oder dem Teil-Frame 06 den MIB mitführt, Folgendes umfasst:
   Konfigurieren des PBCH, des SSS und des PSS derart, dass sie sich auf dem gleichen Teil-Frame befinden, wobei der Teil-Frame der Teil-Frame 1 und/oder der Teil-Frame 6 ist.

7. Verfahren nach Anspruch 4, wobei das Konfigurieren des SSS und des PBCH auf dem Teil-Frame 1 und/oder dem Teil-Frame 6 Folgendes umfasst:
   Konfigurieren des SSS und des PBCH auf dem Teil-Frame 1 und/oder dem Teil-Frame 6 gemäß einer Länge eines zyklischen Präfix, CP, und einer speziellen Teil-Frame-Konfigurationstabelle .

8. Verfahren nach Anspruch 7, wobei das Konfigurieren des SSS und des PBCH auf dem Teil-Frame 1 und/oder dem Teil-Frame 6 gemäß der Länge eines zyklischen Präfix, CP, und der speziellen Teil-Frame-Konfigurationstabelle Folgendes umfasst:

unter einem normalen CP für einen Port 0, einen Port 1, einen Port 2 oder einen Port 3, wenn eine spezielle Teil-Frame-Konfiguration eine spezielle Teil-Frame-Konfiguration 0 und/oder eine spezielle Teil-Frame-Konfiguration 5 in der speziellen Teil-Frame-Konfigurationstabelle ist, Konfigurieren des PSS und des SSS derart, dass sie auf verschiedenen Teil-Frames in den Teil-Frames 1 und 6 platziert sind, und Konfigurieren des PBCH, des PSS und des SSS derart, dass sie auf verschiedenen Teil-Frames in den Teil-Frames 1 und 6 platziert sind, und wenn die spezielle Teil-Frame-Konfiguration eine spezielle Teil-Frame-Konfiguration 1, 2, 3, 4, 6, 7, 8 oder 9 in der speziellen Teil-Frame-Konfigurationstabelle ist, Platzieren des SSS und des PSS auf dem gleichen Teil-Frame in dem Teil-Frame 1 oder 6 und Platzieren des PBCH, des PSS und des SSS auf dem gleichen Teil-Frame in dem Teil-Frame 1 oder 6 und
unter einem erweiterten CP für den Port 0, den Port 1, den Port 2 oder den Port 3, wenn die spezielle Teil-Frame-Konfiguration eine spezielle Teil-Frame-Konfiguration 0 und/oder die spezielle Teil-Frame-Konfiguration 4 in der speziellen Teil-Frame-Konfigurationstabelle ist, Platzieren des PSS und des SSS auf verschiedenen Teil-Frames in den Teil-Frames 1 und 6 und Platzieren des PBCH, des PSS und des SSS auf verschiedenen Teil-Frames in den Teil-Frames 1 und 6, und wenn die spezielle Teil-Frame-Konfiguration eine spezielle Teil-Frame-Konfiguration 1, 2, 3, 5, 6 oder 7 in der speziellen Teil-Frame-Konfigurationstabelle ist, Platzieren des SSS und des PSS auf dem gleichen Teil-Frame in dem Teil-Frame 1 oder 6 und Platzieren des PBCH, des PSS und des SSS auf dem gleichen Teil-Frame in dem Teil-Frame 1 oder 6.

9. Verfahren nach Anspruch 8, wobei unter dem normalen CP für den Port 0 oder 1, wenn die spezielle Teil-Frame-Konfiguration die spezielle Teil-Frame-Konfiguration 1, 2, 3, 4, 6 oder 7 in der speziellen Teil-Frame-Konfigurationstabelle ist, das Platzieren des SSS und des PSS auf dem gleichen Teil-Frame in dem Teil-Frame 1 und/oder 6 Folgendes umfasst:

wenn die spezielle Teil-Frame-Konfiguration die spezielle Teil-Frame-Konfiguration 9 in der speziellen Teil-Frame-Konfigurationstabelle ist, Platzieren des SSS auf dem dritten oder fünften Orthogonal-Frequency-Division-Multiplexing-, OFDM-, Symbol des Teil-Frame 1 und/oder des Teil-Frame 6 und Platzieren des PSS auf dem fünften oder sechsten OFDM-Symbol des Teil-Frame 1 und/oder des Teil-Frame 6, und
wenn die spezielle Teil-Frame-Konfiguration die spezielle Teil-Frame-Konfiguration 1, 2, 3, 4, 6, 7 oder 8 in der speziellen Teil-Frame-Konfigurationstabelle ist, Platzieren des SSS auf dem dritten, vierten oder sechsten OFDM-Symbol des Teil-Frame 1 und/oder des Teil-Frame 6 und Platzieren des PSS auf dem vierten, sechsten oder siebenten OFDM-Symbol des Teil-Frame 1 und/oder des Teil-Frame 6, wobei sich das SSS und das PSS auf verschiedenen OFDM-Symbolen in dem Teil-Frame 1 und/oder dem Teil-Frame 6 befinden.

10. Verfahren nach Anspruch 8, wobei unter dem normalen CP für den Port 2 oder 3, wenn die spezielle Teil-Frame-Konfiguration die spezielle Teil-Frame-Konfiguration 1, 2, 3, 4, 6, 7, 8 oder 9 in der speziellen Teil-Frame-Konfigurationstabelle ist, das Platzieren des SSS und des PSS auf dem gleichen Teil-Frame in dem Teil-Frame 1 6 Folgendes umfasst:

wenn die spezielle Teil-Frame-Konfiguration die spezielle Teil-Frame-Konfiguration 9 in der speziellen Teil-Frame-Konfigurationstabelle ist, Platzieren des SSS auf dem dritten, vierten oder fünften Orthogonal-Frequency-Division-Multiplexing-, OFDM-, Symbol des Teil-Frame 1 und/oder des Teil-Frame 6 und Platzieren des PSS auf dem vierten, fünften oder sechsten OFDM-Symbol des Teil-Frame 1 und/oder des Teil-Frame 6, und
wenn die spezielle Teil-Frame-Konfiguration die spezielle Teil-Frame-Konfiguration 1, 2, 3, 4, 6, 7 oder 8 in der speziellen Teil-Frame-Konfigurationstabelle ist, Platzieren des SSS auf dem dritten, vierten, fünften oder sechsten OFDM-Symbol des Teil-Frame 1 und/oder des Teil-Frame 6 und Platzieren des PSS auf dem vierten, fünften, sechsten oder siebenten OFDM-Symbol des Teil-Frame 1 und/oder des Teil-Frame 6, wobei sich das SSS und das PSS auf verschiedenen OFDM-Symbolen in dem Teil-Frame 1 und/oder dem Teil-Frame 6 befinden.

11. Verfahren nach Anspruch 8, wobei unter dem erweiterten CP für die Ports 0 und 1, wenn die spezielle Teil-Frame-Konfiguration die spezielle Teil-Frame-Konfiguration 1, 2, 3, 5, 6 oder 7 in der speziellen Teil-Frame-Konfigurationstabelle ist, das Platzieren des SSS und des PSS auf dem gleichen Teil-Frame in dem Teil-Frame 1 und/oder 6 Folgendes umfasst:

wenn die spezielle Teil-Frame-Konfiguration die spezielle Teil-Frame-Konfiguration 7 in der speziellen Teil-Frame-Konfigurationstabelle ist, Platzieren des SSS auf dem vierten Orthogonal-Frequency-Division-Multiplexing-, OFDM-, Symbol des Teil-Frame 1 und/oder des Teil-Frame 6 und Platzieren des PSS auf dem fünften OFDM-Symbol des Teil-Frame 1 und/oder des Teil-Frame 6 und

wenn die spezielle Teil-Frame-Konfiguration die spezielle Teil-Frame-Konfiguration 1, 2, 3, 5 oder 6 in der speziellen Teil-Frame-Konfigurationstabelle ist, Platzieren des SSS auf dem dritten oder fünften OFDM-Symbol des Teil-Frame 1 und/oder des Teil-Frame 6 und Platzieren des PSS auf dem fünften oder sechsten OFDM-Symbol des Teil-Frame 1 und/oder des Teil-Frame 6, wobei sich das SSS und das PSS auf verschiedenen OFDM-Symbolen in dem Teil-Frame 1 und/oder dem Teil-Frame 6 befinden.

12. Verfahren nach Anspruch 8, wobei unter dem verlängerten CP für die Anschlüsse 2 und 3, wenn die spezielle Teil-Frame-Konfiguration die spezielle Teil-Frame-Konfiguration 1, 2, 3, 5, 6 oder 7 in der speziellen Teil-Frame-Konfigurationstabelle ist, das Platzieren des SSS und des PSS auf dem gleichen Teil-Frame in dem Teil-Frame 1 6 Folgendes umfasst:

wenn die spezielle Teil-Frame-Konfiguration die spezielle Teil-Frame-Konfiguration 7 in der speziellen Teil-Frame-Konfigurationstabelle ist, Platzieren des SSS auf dem dritten oder fünften Orthogonal-Frequency-Division-Multiplexing(OFDM)-Symbol des Teil-Frame 1 und/oder des Teil-Frame 6 und Platzieren des PSS auf dem vierten oder fünften OFDM-Symbol des Teil-Frame 1 und/oder des Teil-Frame 6 und

wenn die spezielle Teil-Frame-Konfiguration die spezielle Teil-Frame-Konfiguration 1, 2, 3, 5 oder 6 in der speziellen Teil-Frame-Konfigurationstabelle ist, Platzieren des SSS auf dem dritten, vierten oder fünften OFDM-Symbol des Teil-Frame 1 und/oder des Teil-Frame 6 und Platzieren des PSS auf dem vierten, fünften oder sechsten OFDM-Symbol des Teil-Frame 1 und/oder des Teil-Frame 6, wobei sich das SSS und das PSS auf verschiedenen OFDM-Symbolen in dem Teil-Frame 1 und/oder dem Teil-Frame 6 befinden.

13. Verfahren nach Anspruch 7, wobei das Verfahren vor dem Konfigurieren des SSS und des PBCH auf dem Teil-Frame 1 und/oder dem Teil-Frame 6 gemäß der Länge des zyklischen Präfix, CP, und der speziellen Teil-Frame-Konfigurationstabelle Folgendes umfasst:

Bestimmen einer Position eines zellspezifischen Referenzsignals, CRS, auf dem Teil-Frame 1 und/oder dem Teil-Frame 6 gemäß der Länge des CP und der speziellen Teil-Frame-Konfigurationstabelle sowie folgender Formel:

$$l = \begin{cases} 0, N\frac{DL}{symb} - 3, wenn \; p \; \epsilon \; \{0,1\} \\ 1, \qquad\qquad wenn \; p \in \{2,3\} \end{cases}$$

wobei p ein Übermittlungs-Port des CRS ist, $N\frac{DL}{symb}$ eine Gesamtanzahl eines in einem Slot enthaltenen Downlink-Orthogonal-Frequency-Division-Multiplexing, OFDM, ist und 1 ein Zeitdomäneressourcen-Index ist.

14. Verfahren nach Anspruch 13, wobei:

wenn die Ports 0 und 1 sind, unter dem normalen CP, wenn die spezielle Teil-Frame-Konfiguration die spezielle Teil-Frame-Konfiguration 0 und/oder die spezielle Teil-Frame-Konfiguration 5 in der speziellen Teil-Frame-Konfigurationstabelle ist, das CRS auf dem ersten OFDM-Symbol des Teil-Frame 1 und/oder des Teil-Frame 6 platziert wird, wenn die spezielle Teil-Frame-Konfiguration die spezielle Teil-Frame-Konfiguration 9 in der speziellen Teil-Frame-Konfigurationstabelle ist, das CRS auf dem ersten und dem vierten OFDM-Symbol des Teil-Frame 1 und/oder des Teil-Frame 6 platziert wird, und wenn die spezielle Teil-Frame-Konfiguration die spezielle Teil-Frame-Konfiguration 1, 2, 3, 4, 6, 7 oder 8 in der speziellen Teil-Frame-Konfigurationstabelle ist, das CRS auf dem ersten und fünften OFDM-Symbol des Teil-Frame 1 und/oder des Teil-Frame 6 platziert wird, wenn die Ports 0 und 1 sind, unter dem verlängerten CP, wenn die spezielle Teil-Frame-Konfiguration die spezielle Teil-Frame-Konfiguration 0 und/oder die spezielle Teil-Frame-Konfiguration 4 in der speziellen Teil-Frame-Konfigurationstabelle ist, das CRS auf dem ersten OFDM-Symbol des Teil-Frame 1 und/oder des Teil-Frame 6 platziert wird, wenn die spezielle Teil-Frame-Konfiguration die spezielle Teil-Frame-Konfiguration 7 in der speziellen Teil-Frame-Konfigurationstabelle ist, das CRS auf dem ersten und dem dritten OFDM-Symbol des Teil-Frame 1 und/oder des Teil-Frame 6 platziert wird, und wenn die spezielle Teil-Frame-Konfiguration die spezielle Teil-Frame-Konfiguration 1, 2, 3, 5 oder 6 in der speziellen Teil-Frame-Konfigurationstabelle ist, das CRS auf dem ersten und vierten OFDM-Symbol des Teil-Frame 1 und/oder des Teil-Frame 6 platziert wird, und

wenn Ports 2 und 3 sind, das CRS auf dem zweiten OFDM-Symbol des Teil-Frame 1 und/oder des Teil-Frame 6 platziert wird.

15. Paging-Verarbeitungsverfahren, angewandt auf einen Time-Division-Duplexing-, TTD-, Modus, Folgendes umfassend:

Erfassen (S502) eines Paging-Anlasses, wo sich ein Benutzer befindet, und

wenn bestimmt wird, dass der Paging-Anlass ein Teil-Frame 0 und/oder ein Teil-Frame 5 ist, Abfangen (S504) einer Paging-Nachricht auf einem Teil-Frame 1 und/oder einem Teil-Frame 6, und Erfassen eines Master-Informationsblocks, MIB, eines Systeminformationsblocks, SIB1, eines sekundären Synchronisationssignals, SSS und eines primären Synchronisationssignals, PSS, auf dem Teil-Frame 1 und/oder dem Teil-Frame 6, wobei der Teil-Frame 1 und/oder der Teil-Frame 6 als ein Multicast-Broadcast-Single-Frequency-Netzwerk-, MBSFN-, Teil-Frame verwendet werden und

wobei das Verfahren nach dem Abfangen (S504) der Paging-Nachricht auf dem Teil-Frame 1 und/oder dem Teil-Frame 6 ferner Folgendes umfasst:

Bestimmen, ob die Paging-Nachricht eine Identität des Benutzers enthält, wenn die Paging-Nachricht die Identität des Benutzers enthält, Senden einer Paging-Antwortnachricht an eine Basisstation, wo sich der Benutzer befindet, sonst Fortsetzen des Abfangens der Paging-Nachricht nach einer festgelegten Zeit.

16. Verfahren nach Anspruch 15, wobei das Abfangen der Paging-Nachricht auf dem Teil-Frame 1 und/oder dem Teil-Frame 6, wenn der Paging-Anlass der Teil-Frame 0 und/oder der Teil-Frame 5 sind, mindestens eines des Folgenden umfasst:

wenn $i\_s$ 0 ist und $N_S$ 4 ist, Einstellen von $i\_s$ auf 1 oder 3 und

wenn $i\_s$ 2 ist und $N_S$ 4 ist, Einstellen von $i\_s$ auf 3 oder 1,

wobei $i\_s$ eine Indexzahl des Paging-Anlasses darstellt, $N_S$ einen größeren Wert von 1 und $N_b/T$ darstellt, $N_b$ $4*T$ ist, was darstellt, dass jeder Funk-Frame vier Teil-Frames aufweist, die für das Abfangen des Pagings verwendet werden, und T ein diskontinuierlicher Empfangszyklus des Benutzers ist, wenn $i\_s$ 0 ist und $N_S$ 4 ist, der Paging-Anlass der Teil-Frame 0 ist, wenn $i\_s$ 1 ist und $N_S$ 4 ist, ist der Paging-Anlass der Teil-Frame 1, wenn $i\_s$ 2 ist und $N_S$ 4 ist, der Paging-Anlass der Teil-Frame 5 ist, und wenn $i\_s$ 3 ist und $N_S$ 4 ist, der Paging-Anlass der Teil-Frame 6 ist, und

Abfangen der Paging-Nachricht auf einem Paging-Anlass, der durch $N_S=4$ und die eingestellten $i\_s$ zusammen angezeigt wird.

17. Verfahren nach Anspruch 15, wobei das Abfangen (S504) der Paging-Nachricht auf dem Teil-Frame 1 und/oder dem Teil-Frame 6 Folgendes umfasst:

Abfangen eines Physical Downlink Control Channel, PDCCH, des Teil-Frame 1 und/oder des Teil-Frame 6 und Erfassen der Paging-Nachricht an einem Physical Downlink Shared Channel, PDSCH, des Teil-Frame 1 und/oder des Teil-Frame 6 gemäß einem Ressourcenblock-, RB-, Verteilungsmodus und einem Modulations- und Codierschema, MCS, das von dem PDCCH angezeigt wird.

18. Verfahren nach Anspruch 15, wobei das Erfassen des MIB, des SSS und des PSS auf dem Teil-Frame 1 und/oder dem Teil-Frame 6 Folgendes umfasst:

Erfassen eines Physical Broadcast Channel, PBCH, des SSS und des PSS gemäß einer Positionsinformation des PBCH, der den MIB, das SSS und das PSS in dem Teil-Frame 1 und/oder dem Teil-Frame 6 mitführt, und Erfassen des MIB gemäß dem erfassten PBCH.

19. Verfahren nach Anspruch 18, wobei die Positionsinformation des PBCH, des SSS und des PSS in dem Teil-Frame 1 und/oder dem Teil-Frame 6 mindestens eines des Folgenden umfasst:

dass das SSS auf einem Orthogonal-Frequency-Division-Multiplexing-, OFDM-, Symbol vor einem OFDM-Symbol eines Teil-Frame angeordnet ist, wo sich das PSS befindet, und

dass das SSS auf einem OFDM-Symbol nach dem OFDM-Symbol des Teil-Frame angeordnet, wo sich das PSS befindet.

20. Paging-Verarbeitungsvorrichtung, befindlich auf einer Netzwerkseite und angewandt auf einen Time-Division-Duplexing-, TDD-, Modus, Folgendes umfassend:

ein Erfassungsmodul (1202), das dafür eingerichtet ist, einen Paging-Anlass zu erfassen, wo sich ein Benutzer befindet, und
ein Paging-Modul (1204), das für Folgendes eingerichtet ist: wenn bestimmt wird, dass der Paging-Anlass ein Teil-Frame 0 und/oder ein Teil-Frame 5 ist, Paging des Benutzers mit Hilfe eines Teil-Frames 1 und/oder eines Teil-Frames 6,
wobei der Teil-Frame 1 und/oder der Teil-Frame 6 Folgendes enthalten: einen Master-Informationsblock, MIB, einen Systeminformationsblock, SIB1, ein sekundäres Synchronisationssignal, SSS, und ein primäres Synchronisationssignal, PSS, und
wobei die Vorrichtung ferner Folgendes umfasst:
ein Konfigurationsmodul, das dafür eingerichtet ist, einen Physical Broadcast Channel, PBCH, einzurichten, der den MIB, den SIB1, das SSS und das PSS auf dem Teil-Frame 1 und/oder dem Teil-Frame 6 mitführt.

**Revendications**

1. Procédé de traitement de radiomessagerie, appliqué à un mode de duplexage par répartition dans le temps, TDD, comprenant les étapes ci-dessous consistant à :

acquérir (S302) une occasion de radiomessagerie où un utilisateur est situé ; et
dans le cas où il est déterminé que l'occasion de radiomessagerie correspond à au moins l'une parmi une sous-trame « 0 » et une sous-trame « 5 », avertir par radiomessagerie (S304) l'utilisateur en utilisant au moins l'une parmi une sous-trame « 1 » et une sous-trame « 6 » ; ladite au moins une sous-trame parmi la sous-trame « 1 » et la sous-trame « 6 » contenant : un bloc d'informations maître, MIB, un bloc d'informations système, SIB1, un signal de synchronisation secondaire, SSS, et un signal de synchronisation primaire, PSS ;
dans lequel ladite au moins une sous-trame parmi la sous-trame « 1 » et la sous-trame « 6 » est utilisée en qualité de sous-trame de réseau de radiodiffusion/multidiffusion monofréquence, MBSFN.

2. Procédé selon la revendication 1, dans lequel, lorsque l'occasion de radiomessagerie correspond à au moins une sous-trame parmi la sous-trame « 0 » et la sous-trame « 5 », l'étape d'avertissement par radiomessagerie de l'utilisateur sur au moins l'une parmi la sous-trame « 1 » et la sous-trame « 6 » comprend au moins l'une des étapes ci-dessous consistant à :

lorsque « i_s » est égal à « 0 » et « Ns » est égal à « 4 », définir « i_s » afin qu'il soit égal à « 1 » ou « 3 » ; et
lorsque « i_s » est égal à « 2 » et « Ns » est égal à « 4 », définir « i_s » afin qu'il soit égal à « 3 » ou « 1 » ;
dans lequel, « i_s » représente un numéro d'index de l'occasion de radiomessagerie, « Ns » représente une valeur plus élevée de « 1 » et « $N_b/T$ », « $N_b$ » est égal à « 4*T » ce qui indique que chaque trame radio présente quatre sous-trames utilisées pour la radiomessagerie, et « T » est un cycle de réception discontinu de l'utilisateur ; lorsque « i_s » est égal à « 0 » et « Ns » est égal à « 4 », l'occasion de radiomessagerie correspond à la sous-trame « 0 » ; lorsque « i_s » est égal à « 1 » et « Ns » est égal à « 4 », l'occasion de radiomessagerie correspond à la sous-trame « 1 » ; lorsque « i_s » est égal à « 2 » et « Ns » est égal à « 4 », l'occasion de radiomessagerie correspond à la sous-trame « 5 » ; et lorsque « i_s » est égal à « 3 » et « Ns » est égal à « 4 », l'occasion de radiomessagerie correspond à la sous-trame « 6 » ; et
avertir par radiomessagerie l'utilisateur lors d'une occasion de radiomessagerie indiquée par Ns =4 et la valeur « i_s » définie conjointement.

3. Procédé selon la revendication 1, dans lequel, suite à l'étape d'avertissement par radiomessagerie (S304) de l'utilisateur en utilisant au moins une sous-trame parmi la sous-trame « 1 » et la sous-trame « 6 », le procédé comprend en outre les étapes ci-dessous consistant à :
combiner (S402) des contenus de radiomessagerie de multiples utilisateurs avec la même occasion de radiomessagerie, en un message de radiomessagerie, et transmettre le message de radiomessagerie aux multiples utilisateurs par le biais d'un canal de radiomessagerie.

**4.** Procédé selon la revendication 1, dans lequel, avant d'acquérir (S302) l'occasion de radiomessagerie où l'utilisateur est situé, le procédé comprend en outre l'étape ci-dessous consistant à :
configurer un canal de diffusion physique, PBCH, portant le bloc MIB, le bloc SIB1, le signal SSS et le signal PSS, sur au moins une sous-trame parmi la sous-trame « 1 » et la sous-trame « 6 ».

**5.** Procédé selon la revendication 4, dans lequel l'étape de configuration du signal SSS sur au moins une sous-trame parmi la sous-trame « 1 » et la sous-trame « 6 » comprend l'étape ci-dessous consistant à :
configurer le signal SSS et le signal PSS afin qu'ils soient situés sur la même sous-trame, dans lequel la même sous-trame est la sous-trame « 1 » ou la sous-trame « 6 » ; et dans lequel le fait que le signal SSS et le signal PSS sont situés sur la même sous-trame comprend au moins l'un des éléments suivants : le signal SSS est situé sur un symbole de multiplexage par répartition orthogonale de la fréquence, OFDM, avant un symbole de multiplexage OFDM d'une sous-trame où le signal PSS est situé ; et le signal SSS est situé sur un symbole de multiplexage OFDM après le symbole de multiplexage OFDM de la sous-trame où le signal PSS est situé.

**6.** Procédé selon la revendication 4, dans lequel l'étape de configuration du canal PBCH portant le bloc MIB sur au moins une sous-trame parmi la sous-trame « 1 » et la sous-trame « 6 » comprend l'étape ci-dessous consistant à :
configurer le canal PBCH, le signal SSS et le signal PSS afin qu'ils soient situés sur la même sous-trame, dans lequel la même sous-trame est la sous-trame « 1 » ou la sous-trame « 6 ».

**7.** Procédé selon la revendication 4, dans lequel l'étape de configuration du signal SSS et du canal PBCH sur au moins une sous-trame parmi la sous-trame « 1 » et la sous-trame « 6 » comprend l'étape ci-dessous consistant à :
configurer le signal SSS et le canal PBCH sur au moins une sous-trame parmi la sous-trame « 1 » et la sous-trame « 6 » selon une longueur d'un préfixe cyclique, CP, et une table de configuration de sous-trame spéciale.

**8.** Procédé selon la revendication 7, dans lequel l'étape de configuration du signal SSS et du canal PBCH sur au moins une sous-trame parmi la sous-trame « 1 » et la sous-trame « 6 » selon la longueur du préfixe cyclique, CP, et la table de configuration de sous-trame spéciale comprend les étapes ci-dessous consistant à :

sous un préfixe CP normal, pour un port « 0 », un port « 1 », un port « 2 » ou un port « 3 », lorsqu'une configuration de sous-trame spéciale correspond à au moins l'une parmi une configuration de sous-trame spéciale « 0 » et une configuration de sous-trame spéciale « 5 », dans la table de configuration de sous-trame spéciale, configurer le signal PSS et le signal SSS afin qu'ils soient placés sur différentes sous-trames dans les sous-trames « 1 » et « 6 », et configurer le canal PBCH, le signal PSS et le signal SSS afin qu'ils soient placés sur différentes sous-trames dans les sous-trames « 1 » et « 6 » ; et lorsque la configuration de sous-trame spéciale est une configuration de sous-trame spéciale 1, 2, 3, 4, 6, 7, 8 ou 9 dans la table de configuration de sous-trame spéciale, placer le signal SSS et le signal PSS sur la même sous-trame dans la sous-trame « 1 » ou « 6 », et placer le canal PBCH, le signal PSS et le signal SSS sur la même sous-trame dans la sous-trame « 1 » ou « 6 » ; et sous un préfixe CP étendu, pour le port « 0 », le port « 1 », le port « 2 » ou le port « 3 », lorsque la configuration de sous-trame spéciale correspond à au moins l'une parmi la configuration de sous-trame spéciale « 0 » et la configuration de sous-trame spéciale « 4 » dans la table de configuration de sous-trame spéciale, placer le signal PSS et le signal SSS sur différentes sous-trames dans les sous-trames « 1 » et « 6 », et placer le canal PBCH, le signal PSS et le signal SSS sur différentes sous-trames dans les sous-trames « 1 » et « 6 » ; et lorsque la configuration de sous-trame spéciale correspond à la configuration de sous-trame spéciale 1, 2, 3, 5, 6 ou 7 dans la table de configuration de sous-trame spéciale, placer le signal SSS et le signal PSS sur la même sous-trame dans la sous-trame « 1 » ou « 6 », et placer le canal PBCH, le signal PSS et le signal SSS sur la même sous-trame dans la sous-trame « 1 » ou « 6 ».

**9.** Procédé selon la revendication 8, dans lequel, sous le préfixe CP normal, pour le port « 0 » ou « 1 », lorsque la configuration de sous-trame spéciale correspond à la configuration de sous-trame spéciale 1, 2, 3, 4, 6, 7, 8 ou 9 dans la table de configuration de sous-trame spéciale, l'étape de placement du signal SSS et du signal PSS sur la même sous-trame dans la sous-trame « 1 » ou « 6 » comprend les étapes ci-dessous consistant à :

lorsque la configuration de sous-trame spéciale correspond à la configuration de sous-trame spéciale « 9 » dans la table de configuration de sous-trame spéciale, placer le signal SSS sur le troisième ou le cinquième symbole de multiplexage par répartition orthogonale de la fréquence, OFDM, d'au moins l'une parmi la sous-trame « 1 » et la sous-trame « 6 », et placer le signal PSS sur le cinquième ou le sixième symbole de multiplexage OFDM d'au moins l'une parmi la sous-trame « 1 » et la sous-trame « 6 » ; et
lorsque la configuration de sous-trame spéciale correspond à la configuration de sous-trame spéciale 1, 2, 3, 4, 6, 7 ou 8 dans la table de configuration de sous-trame spéciale, placer le signal SSS sur le troisième, le quatrième ou le sixième symbole de multiplexage OFDM d'au moins l'une parmi la sous-trame « 1 » et la sous-trame « 6 », et placer le signal PSS sur le quatrième, le sixième ou le septième symbole de multiplexage OFDM d'au moins l'une parmi la sous-trame « 1 » et la sous-trame « 6 » ; dans lequel, le signal SSS et le signal PSS sont situés sur différents symboles de multiplexage OFDM dans au moins une sous-trame parmi la sous-trame « 1 » et la sous-trame « 6 ».

10. Procédé selon la revendication 8, dans lequel, sous le préfixe CP normal, pour le port « 2 » ou « 3 », lorsque la configuration de sous-trame spéciale correspond à la configuration de sous-trame spéciale 1, 2, 3, 4, 6, 7, 8 ou 9 dans la table de configuration de sous-trame spéciale, l'étape de placement du signal SSS et du signal PSS sur la même sous-trame dans la sous-trame « 1 » ou « 6 », comprend les étapes ci-dessous consistant à :

lorsque la configuration de sous-trame spéciale correspond à la configuration de sous-trame spéciale « 9 » dans la table de configuration de sous-trame spéciale, placer le signal SSS sur le troisième, le quatrième ou le cinquième symbole de multiplexage par répartition orthogonale de la fréquence, OFDM, d'au moins une sous-trame parmi la sous-trame « 1 » et la sous-trame « 6 », et placer le signal PSS sur le quatrième, le cinquième ou le sixième symbole de multiplexage OFDM d'au moins une sous-trame parmi la sous-trame « 1 » et la sous-trame « 6 » ; et
lorsque la configuration de sous-trame spéciale correspond à la configuration de sous-trame spéciale 1, 2, 3, 4, 6, 7 ou 8 dans la table de configuration de sous-trame spéciale, placer le signal SSS sur le troisième, le quatrième, le cinquième ou le sixième symbole de multiplexage OFDM d'au moins une sous-trame parmi la sous-trame « 1 » et la sous-trame « 6 », et placer le signal PSS sur le quatrième, le cinquième, le sixième ou le septième symbole de multiplexage OFDM d'au moins une sous-trame parmi la sous-trame « 1 » et la sous-trame « 6 » ; dans lequel, le signal SSS et le signal PSS sont situés sur différents symboles de multiplexage OFDM dans au moins une sous-trame parmi la sous-trame « 1 » et la sous-trame « 6 ».

11. Procédé selon la revendication 8, dans lequel, sous le préfixe CP étendu, pour les ports « 0 » et « 1 », lorsque la configuration de sous-trame spéciale correspond à la configuration de sous-trame spéciale 1, 2, 3, 5, 6 ou 7 dans la table de configuration de sous-trame spéciale, l'étape de placement du signal SSS et du signal PSS sur la même sous-trame dans la sous-trame « 1 » ou « 6 » comprend les étapes ci-dessous consistant à :

lorsque la configuration de sous-trame spéciale correspond à la configuration de sous-trame spéciale « 7 » dans la table de configuration de sous-trame spéciale, placer le signal SSS sur le quatrième symbole de multiplexage par répartition orthogonale de la fréquence, OFDM, d'au moins une sous-trame parmi la sous-trame « 1 » et la sous-trame « 6 », et placer le signal PSS sur le cinquième symbole de multiplexage OFDM d'au moins une sous-trame parmi la sous-trame « 1 » et la sous-trame « 6 » ; et
lorsque la configuration de sous-trame spéciale correspond à la configuration de sous-trame spéciale 1, 2, 3, 5 ou 6 dans la table de configuration de sous-trame spéciale, placer le signal SSS sur le troisième ou le cinquième symbole de multiplexage OFDM d'au moins une sous-trame parmi la sous-trame « 1 » et la sous-trame « 6 », et placer le signal PSS sur le cinquième ou le sixième symbole de multiplexage OFDM d'au moins une sous-trame parmi la sous-trame « 1 » et la sous-trame « 6 » ; dans lequel le signal SSS et le signal PSS sont situés sur différents symboles de multiplexage OFDM dans au moins une sous-trame parmi la sous-trame « 1 » et la sous-trame « 6 ».

12. Procédé selon la revendication 8, dans lequel, sous le préfixe CP étendu, pour les ports « 2 » et « 3 », lorsque la configuration de sous-trame spéciale correspond à la configuration de sous-trame spéciale 1, 2, 3, 5, 6 ou 7 dans la table de configuration de sous-trame spéciale, l'étape de placement du signal SSS et du signal PSS sur la même sous-trame dans la sous-trame « 1 » ou « 6 » comprend les étapes ci-dessous consistant à :

lorsque la configuration de sous-trame spéciale correspond à la configuration de sous-trame spéciale 7 dans la table de configuration de sous-trame spéciale, placer le signal SSS sur le troisième ou le quatrième symbole de multiplexage par répartition orthogonale de la fréquence, OFDM, d'au moins une sous-trame parmi la sous-trame « 1 » et la sous-trame « 6 », et placer le signal PSS sur le quatrième ou le cinquième symbole de multiplexage OFDM d'au moins une sous-trame parmi la sous-trame « 1 » et la sous-trame « 6 » ; et
lorsque la configuration de sous-trame spéciale correspond à la configuration de sous-trame spéciale 1, 2, 3, 5 ou 6 dans la table de configuration de sous-trame spéciale, placer le signal SSS sur le troisième, le quatrième ou le cinquième symbole de multiplexage OFDM d'au moins une sous-trame parmi la sous-trame « 1 » et la sous-trame « 6 », et placer le signal PSS sur le quatrième, le cinquième ou le sixième symbole de multiplexage OFDM d'au moins une sous-trame parmi la sous-trame « 1 » et la sous-trame « 6 » ; dans lequel, le signal SSS et le signal PSS sont situés sur différents symboles de multiplexage OFDM dans au moins une sous-trame parmi la sous-trame « 1 » et la sous-trame « 6 ».

**13.** Procédé selon la revendication 7, dans lequel, avant de configurer le signal SSS et le canal PBCH sur au moins une sous-trame parmi la sous-trame « 1 » et la sous-trame « 6 » selon la longueur du préfixe cyclique, CP, et la table de configuration de sous-trame spéciale, le procédé comprend l'étape ci-dessous consistant à :

déterminer un emplacement d'un signal de référence spécifique à la cellule, CRS, sur au moins une sous-trame parmi la sous-trame « 1 » et la sous-trame « 6 » selon la longueur du préfixe CP et la table de configuration de sous-trame spéciale, ainsi que selon la formule ci-dessous :

$$l = \begin{cases} 0, N_{\text{symb}}^{\text{DL}} - 3 & \text{si } p \in \{0,1\} \\ 1 & \text{si } p \in \{2,3\} \end{cases}$$

dans laquelle, « p » est un port d'émission du signal CRS, « $N_{\text{symb}}^{\text{DL}}$ » est un nombre total d'un multiplexage par répartition orthogonale de la fréquence, OFDM, en liaison descendante, contenu dans un intervalle, et « 1 » est un index de ressource de domaine temporel.

**14.** Procédé selon la revendication 13, dans lequel :

lorsque les ports sont les ports « 0 » et « 1 », sous le préfixe CP normal, lorsque la configuration de sous-trame spéciale correspond à au moins l'une parmi la configuration de sous-trame spéciale « 0 » et la configuration de sous-trame spéciale « 5 », dans la table de configuration de sous-trame spéciale, le signal CRS est placé sur le premier symbole de multiplexage OFDM d'au moins une sous-trame parmi la sous-trame « 1 » et la sous-trame « 6 » ; lorsque la configuration de sous-trame spéciale correspond à la configuration de sous-trame spéciale « 9 » dans la table de configuration de sous-trame spéciale, le signal CRS est placé sur les premier et quatrième symboles de multiplexage OFDM d'au moins une sous-trame parmi la sous-trame « 1 » et la sous-trame « 6 » ; et lorsque la configuration de sous-trame spéciale correspond à la configuration de sous-trame spéciale 1, 2, 3, 4, 6, 7 ou 8 dans la table de configuration de sous-trame spéciale, le signal CRS est placé sur les premier et cinquième symboles de multiplexage OFDM d'au moins une sous-trame parmi la sous-trame « 1 » et la sous-trame « 6 » ;
lorsque les ports sont les ports « 0 » et « 1 », sous le préfixe CP étendu, lorsque la configuration de sous-trame spéciale correspond à au moins l'une parmi la configuration de sous-trame spéciale « 0 » et la configuration de sous-trame spéciale « 4 » dans la table de configuration de sous-trame spéciale, le signal CRS est placé sur le premier symbole de multiplexage OFDM d'au moins une sous-trame parmi la sous-trame « 1 » et la sous-trame « 6 » ; lorsque la configuration de sous-trame spéciale correspond à la configuration de sous-trame spéciale « 7 » dans la table de configuration de sous-trame spéciale, le signal CRS est placé sur les premier et troisième symboles de multiplexage OFDM d'au moins une sous-trame parmi la sous-trame « 1 » et la sous-trame « 6 » ; et lorsque la configuration de sous-trame spéciale correspond à la configuration de sous-trame spéciale 1, 2, 3, 5 ou 6 dans la table de configuration de sous-trame spéciale, le signal CRS est placé sur les premier et quatrième symboles de multiplexage OFDM d'au moins une sous-trame parmi la sous-trame « 1 » et la sous-trame « 6 » ; et
lorsque les ports sont les ports « 2 » et « 3 », le signal CRS est placé sur le second symbole de multiplexage OFDM d'au moins une sous-trame parmi la sous-trame « 1 » et la sous-trame « 6 ».

**15.** Procédé de traitement de radiomessagerie, appliqué à un mode de duplexage par répartition dans le temps, TDD, comprenant les étapes ci-dessous consistant à :

acquérir (S502) une occasion de radiomessagerie où un utilisateur est situé ;
dans le cas où l'occasion de radiomessagerie correspond à au moins une sous-trame parmi une sous-trame « 0 » et une sous-trame « 5 », intercepter (S504) un message de radiomessagerie sur au moins l'une parmi une sous-trame « 1 » et une sous-trame « 6 » ; et acquérir un bloc d'informations maître, MIB, un bloc d'informations système, SIB1, un signal de synchronisation secondaire, SSS, et un signal de synchronisation primaire, PSS, sur la sous-trame « 1 » ou « 6 » ;
dans lequel au moins une sous-trame parmi la sous-trame « 1 » et la sous-trame « 6 » est utilisée en qualité de sous-trame de réseau de diffusion/multidiffusion monofréquence, MBSFN ; et

dans lequel, après avoir intercepté (S504) le message de radiomessagerie sur au moins une sous-trame parmi la sous-trame « 1 » et la sous-trame « 6 », le procédé comprend en outre l'étape ci-dessous consistant à : déterminer si le message de radiomessagerie contient une identité de l'utilisateur ; si le message de radiomessagerie contient l'identité de l'utilisateur, envoyer un message de réponse de radiomessagerie à une station de base où l'utilisateur est situé ; sinon, continuer à intercepter le message de radiomessagerie après un temps prédéterminé.

16. Procédé selon la revendication 15, dans lequel, dans le cas où l'occasion de radiomessagerie correspond à au moins une sous-trame parmi la sous-trame « 0 » et la sous-trame « 5 », l'étape d'interception du message de radiomessagerie sur au moins une sous-trame parmi la sous-trame « 1 » et la sous-trame « 6 » comprend au moins l'une des étapes ci-dessous consistant à :

lorsque « i_s » est égal à « 0 » et « Ns » est égal à « 4 », définir « i_s » afin qu'il soit égal à « 1 » ou « 3 » ; et lorsque « i_s » est égal à « 2 » et « Ns » est égal à « 4 », définir « i_s » afin qu'il soit égal à « 3 » ou « 1 » ; dans lequel, « i_s » représente un numéro d'index de l'occasion de radiomessagerie, « Ns » représente une valeur plus élevée de « 1 » et « $N_b/T$ », « $N_b$ » est égal à « 4*T » ce qui indique que chaque trame radio présente quatre sous-trames utilisées pour intercepter la radiomessagerie, et « T » est un cycle de réception discontinu de l'utilisateur ; lorsque « i_s » est égal à « 0 » et « Ns » est égal à « 4 », l'occasion de radiomessagerie correspond à la sous-trame « 0 » ; lorsque « i_s » est égal à « 1 » et « Ns » est égal à « 4 », l'occasion de radiomessagerie correspond à la sous-trame « 1 » ; lorsque « i_s » est égal à « 2 » et « Ns » est égal à « 4 », l'occasion de radiomessagerie correspond à la sous-trame « 5 » ; et lorsque « i_s » est égal à « 3 » et « Ns » est égal à « 4 », l'occasion de radiomessagerie correspond à la sous-trame « 6 » ; et intercepter le message de radiomessagerie lors d'une occasion de radiomessagerie indiquée par Ns=4 et la valeur « i_s » définie conjointement.

17. Procédé selon la revendication 15, dans lequel l'étape d'interception (S504) du message de radiomessagerie sur au moins une sous-trame parmi la sous-trame « 1 » et la sous-trame « 6 » comprend les étapes ci-dessous consistant à :

intercepter un canal de commande physique de liaison descendante, PDCCH, d'au moins une sous-trame parmi la sous-trame « 1 » et la sous-trame « 6 » ; et acquérir le message de radiomessagerie sur un canal partagé de liaison descendante physique, PDSCH, d'au moins une sous-trame parmi la sous-trame « 1 » et la sous-trame « 6 » selon un mode de distribution de bloc de ressources, RB, et un schéma de modulation et codage, MCS, indiqué par le canal PDCCH.

18. Procédé selon la revendication 15, dans lequel l'étape d'acquisition du bloc MIB, du signal SSS et du signal PSS sur au moins une sous-trame parmi la sous-trame « 1 » et la sous-trame « 6 » comprend les étapes ci-dessous consistant à : acquérir un canal de diffusion physique, PBCH, le signal SSS et le signal PSS selon des informations de localisation du canal PBCH portant le bloc MIB, le signal SSS et le signal PSS dans au moins une sous-trame parmi la sous-trame « 1 » et la sous-trame « 6 », et acquérir le bloc MIB selon le canal PBCH acquis.

19. Procédé selon la revendication 18, dans lequel les informations de localisation du canal PBCH, du signal SSS et du signal PSS dans au moins une sous-trame parmi la sous-trame « 1 » et la sous-trame « 6 » comprennent au moins l'une des informations ci-dessous selon lesquelles :

le signal SSS est situé sur un symbole de multiplexage par répartition orthogonale de la fréquence, OFDM, avant un symbole de multiplexage OFDM d'une sous-trame où le signal PSS est situé ; et le signal SSS est situé sur un symbole de multiplexage OFDM après le symbole de multiplexage OFDM de la sous-trame où le signal PSS est situé.

20. Dispositif de traitement de radiomessagerie, situé sur un côté de réseau et appliqué à un mode de duplexage par répartition dans le temps, TDD, comprenant :

un module d'acquisition (1202) apte à acquérir une occasion de radiomessagerie où un utilisateur est situé ; et un module de radiomessagerie (1204) apte à, dans le cas où il est déterminé que l'occasion de radiomessagerie correspond à au moins une sous-trame parmi une sous-trame « 0 » et une sous-trame « 5 », avertir par radiomessagerie l'utilisateur en utilisant au moins une sous-trame parmi une sous-trame « 1 » et une sous-trame « 6 » ;

dans lequel, ladite au moins une sous-trame parmi la sous-trame « 1 » et la sous-trame « 6 » contient : un bloc d'informations maître, MIB, un bloc d'informations système, SIB1, un signal de synchronisation secondaire, SSS, et un signal de synchronisation primaire, PSS ; et

dans lequel le dispositif comprend en outre :

un module de configuration apte à configurer un canal de diffusion physique, PBCH, portant le bloc MIB, le bloc SIB1, le signal SSS et le signal PSS sur au moins une sous-trame parmi la sous-trame « 1 » et la sous-trame « 6 ».

10ms radio frame

| 0 | 1 | 2 | 3 | 4 | 5 | 6 | 7 | 8 | 9 |

PSS          SSS

0.5ms
1 time slot

| 1 | 2 | 3 | 4 | 5 | 6 | 7 |

Normal
CP

| 1 | 2 | 3 | 4 | 5 | 6 |

Extended
CP

Fig. 1

10ms radio frame

| 0 | 1 | 2 | 3 | 4 | 5 | 6 | 7 | 8 | 9 |

PSS          SSS

0.5ms
1 time slot

| 1 | 2 | 3 | 4 | 5 | 6 | 7 | 1 | 2 | 3 | 4 | 5 | 6 | 7 |

Normal
CP

| 1 | 2 | 3 | 4 | 5 | 6 | 1 | 2 | 3 | 4 | 5 | 6 |

Extended
CP

Fig. 2

| | |
|---|---|
| ACQUIRE PAGING OCCASION AT USER LOCATION | S302 |

| | |
|---|---|
| IF IT IS DETERMINED THAT THE PAGING OCCASION IS A SUBFRAME 0 AND/OR A SUBFRAME 5, PAGE THE USER USING A SUBFRAME 1 AND/OR A SUBFRAME 6, THE SUBFRAME 1 AND/OR SUBFRAME 6 HAVING THEREIN: AN MIB, SIB1, SSS AND PSS | S304 |

Fig. 3

| | |
|---|---|
| Acquire a paging occasion where a user is located | S302 |

| | |
|---|---|
| In the case of determining that the paging occasion is at least one of a subframe 0 and a subframe 5, page the user by using at least one of a subframe 1 and a subframe 6, the at least one of the subframe 1 and the subframe 6 containing: a MIB, a SIB1, a SSS and a PSS | S304 |

| | |
|---|---|
| Combine paging contents of multiple users with the same paging occasion into one paging message, and transmit the paging message to the multiple users through a paging channel | S402 |

Fig. 4

| | |
|---|---|
| Acquire a paging occasion where a user is located | S502 |

| | |
|---|---|
| In the case that the paging occasion is at least one of a subframe 0 and a subframe 5, intercept a paging message on at least one of a subframe 1 and a subframe 6; and acquire a MIB, a SIB1, a SSS and a PSS on at least one of the subframe 1 and the subframe 6 | S504 |

Fig. 5

10ms radio frame

| 0 | 1 | 2 | 3 | 4 | 5 | 6 | 7 | 8 | 9 |

SSS    PSS

5ms
1 time slot

| 1 | 2 | 3 | 4 | 5 | 6 | 7 |

Normal
CP

5ms
1 time slot

| 1 | 2 | 3 | 4 | 5 | 6 |

Extended
CP

Fig. 6

10ms radio frame

| 0 | 1 | 2 | 3 | 4 | 5 | 6 | 7 | 8 | 9 |

PBCH    SSS    PSS

5ms
1 time slot

| 1 | 2 | 3 | 4 | 5 | 6 | 7 |

Normal
CP

5ms
1 time slot

| 1 | 2 | 3 | 4 | 5 | 6 |

Extended
CP

Fig. 7

```
                    ┌─────────────────┐
                    │  Turn on a UE B │
                    └─────────────────┘
                             │
                             ▼
              Receive a
           PSS at several central
           frequency points where a    ──No──►  Conduct a full-band
           LTE cell may possibly                scanning in a frequency
                exist                           band scope of a LTE system
                             │
                            Yes
                             ▼
           Acquire a cell ID in a cell
           group and determine a 5ms
              time slot boundary
                             │◄────────────No──┐
                             ▼                 │
                  Search forward SSS ──────────┘
                             │
                            Yes
                             ▼
           Detect the cell ID, acquire
             10ms radio frame
            synchronization, and
           determine whether it is in
             a TDD or FDD mode
                             │
                             ▼
           OFDM under a normal CP ──No──►  Search a PBCH in a fourth OFDM
                             │               symbol of a subframe where the
                            Yes              SSS is located
                             ▼
           Search the PBCH in a third
             OFDM symbol of the
           subframe where the SSS is
                  located
                             │
                             ▼
              Acquire MIB ◄──────────────────────┐
              information
```

Fig. 8

Fig. 9

User A calculates a paging occasion of itself, and calculates a UE ID firstly through its own IMSI or S-TMSI allocated by a MME

i_s =1? —Yes→ i_s==1

No

i_s =3? —Yes→ i_s==3

No

i_s=0? —Yes→ i_s==1

No

i_s=2? —Yes→ i_s==3

No

Report an error

Fig. 10

Fig. 11

Acquisition Module 1202

Paging Module 1204

Fig. 12

First Acquisition Module 1302

Intercepting Module 1304

Second Acquisition Module 1306

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015139328 A

- US 2012213130 A

### Non-patent literature cited in the description

- 3rd Generation Partnership Project; Technical Specification Group Radio Access Network; Evolved Universal Terrestrial Radio Access (E-UTRA); Physical channels and modulation (Release 12). *3GPP STANDARD,* 22 September 2015, 1-136
- 3rd Generation Partnership Project; Technical Specification Group Radio Access Network; Evolved Universal Terrestrial Radio Access (E-UTRA); Radio Resource Control (RRC); Protocol specification (Release 12). *3GPP STANDARD,* 24 September 2015, 1-453

- 3rd Generation Partnership Project; Technical Specification Group Radio Access Network; Evolved Universal Terrestrial Radio Access (E-UTRA); User Equipment (UE) procedures in idle mode (Release 12). *3GPP DRAFT,* 24 September 2015
- *Third Generation Partnership Project (3GPP) TS 36.211 V12.7.0,* 22 September 2015
- *3GPP TS 36.211 V12.7.0,* 22 September 2015
- *3GPP TS 36.211 V12.7.0 22,* September 2015